# EUROPEAN PATENT SPECIFICATION

(11) **EP 4 368 324 B1**
(45) Date of publication and mention of the grant of the patent: **07.10.2026**
(21) Application number: 22205957.8
(22) Date of filing: 08.11.2022
(51) Int. Cl.: B23F 19/10, B23F 21/20, B23C 5/20

(54) **MILLING TOOL AND METHOD FOR CHAMFERING FLANK EDGES OF TEETH ON A CYLINDRICAL TOOTHED WORKPIECE**
FRÄSWERKZEUG UND VERFAHREN ZUM ANFASEN VON FLANKENKANTEN VON ZÄHNEN AN EINEM ZYLINDERFÖRMIGEN VERZAHNTEN WERKSTÜCK
OUTIL DE FRAISAGE ET PROCÉDÉ DE CHANFREINAGE DES BORDS DE FLANC DE DENTS D'UNE PIÈCE À USINER DENTÉE CYLINDRIQUE

(43) Date of publication of application: 15.05.2024
(73) Proprietor: AB Sandvik Coromant, 811 81 Sandviken (SE)
(72) Inventor: Mohanty, Swetapadma, 811 81 Sandviken (SE); Jia, Tong, 811 81 Sandviken (SE); Bosch, Achim, 811 81 Sandviken (SE)
(74) Representative: Sandvik

(56) References cited:
- DE-A1- 102018 118 213
- JP-A- 2022 120 943
- JP-A- S58 160 017

## Description

### FIELD OF THE INVENTION AND PRIOR ART

The present invention relates to a milling tool according to the preamble of claim 1 for chamfering flank edges of internal or external teeth on a cylindrical toothed workpiece at opposite end faces of the workpiece. The invention also relates to a method for chamfering such flank edges.

External or internal gear teeth or spline teeth may be machined on a cylindrical workpiece by cutting technologies using different types of cutting tools. In such a case, the resulting teeth on the workpiece will have burrs and sharp edges at the intersections between the tooth flank surfaces of the teeth and the respective end face of the workpiece following the initial machining operation, i.e. at the flank edges of the teeth at the opposite end faces of the workpiece. A subsequent finishing operation may therefore be required in order to chamfer the flank edges of the teeth at the opposite end faces of the workpiece and thereby remove said burrs and sharp edges.

WO 2022/013068 A1 discloses a method for chamfering flank edges of teeth on a cylindrical toothed workpiece at an end face of the workpiece by means of a milling tool, wherein the workpiece and the milling tool are rotated with a predefined relationship between the speed of rotation of the milling tool and the speed of rotation of the workpiece, while keeping the axis of rotation of the milling tool in parallel with the central axis of the workpiece. In the method according to WO 2022/013068 A1, the flank edges are chamfered in such a manner that a first flank edge on a tooth is chamfered in a direction from the tooth tip to the tooth root of the tooth, whereupon an opposite second flank edge on an adjacent tooth is chamfered in a direction from the tooth root to the tooth tip of the tooth. The milling tool disclosed in WO 2022/013068 A1 is according to the preamble of the appended claim 1 and is configured to be moved into contact with a forwardly facing end face of the workpiece. When the flank edges at a forwardly facing first end face of the workpiece have been chamfered, the workpiece has to be repositioned in the workpiece holder to make the opposite second end face of the workpiece face forwards towards the milling tool before proceeding with a chamfering of the flank edges at this second end face of the workpiece.

### OBJECT OF THE INVENTION

The object of the present invention is to provide a milling tool of the above-mentioned type that has a new and favourable design.

### SUMMARY OF THE INVENTION

According to a first aspect of the invention, said object is achieved by means of a milling tool having the features defined in claim 1.

The milling tool according to the first aspect of the invention comprises an elongated tool body, which at a rear end has a rear part configured for attachment to a machine and at a distance from the rear part has a cutting part provided with cutting edges, wherein the tool body comprises an elongated shank part, which carries the cutting part and extends from the cutting part towards the rear part. The shank part has a front end facing the cutting part, an opposite rear end and a peripheral surface extending around the shank part between the rear end and the front end thereof, wherein the shank part has a longitudinal central axis that coincides with an axis of rotation of the tool body.

The cutting part is provided with at least one pair of cutting edges consisting of a first cutting edge facing away from the rear part and a second cutting edge facing the rear part and located closer to the rear part than the first cutting edge, wherein:
- the first cutting edge has a rear end and an opposite front end, the rear end of the first cutting edge being located closer to the rear part of the tool body than the front end of the first cutting edge, wherein the front end of the first cutting edge is located closer to the axis of rotation than the rear end of the first cutting edge and the distance between the first cutting edge and the axis of rotation is gradually increasing as seen in a direction along the first cutting edge from the front end thereof to the rear end thereof, and
- the second cutting edge has a front end and an opposite rear end, the rear end of the second cutting edge being located closer to the rear part of the tool body than the front end of the second cutting edge, wherein the rear end of the second cutting edge is located at a longer distance from the axis of rotation than the radially outermost part of the peripheral surface of the shank part, and wherein the rear end of the second cutting edge is located closer to the axis of rotation than the front end of the second cutting edge and the distance between the second cutting edge and the axis of rotation is gradually increasing as seen in a direction along the second cutting edge from the rear end thereof to the front end thereof.

Furthermore, the cutting part has an extension in the axial direction of the tool body limited to an area between a first plane that extends perpendicularly to the axis of rotation and intersects the rear end of the second cutting edge and a second plane that extends perpendicularly to the axis of rotation and intersects the front end of the first cutting edge. According to a first alternative, the cutting part constitutes an axially foremost part of the tool body, i.e. the part of the tool body that is most distant from the rear part of the tool body. According to a second alternative, the tool body comprises a front part that projects from the cutting part on the side thereof facing away from the rear part, wherein the front end of the first cutting edge is located at a longer distance from the axis of rotation than a radially outermost part of this front part.

The design of the tool body with the elongated shank part between the cutting part and the rear part, the arrangement of the first and second cutting edges on the cutting part as defined above and the position of the second cutting edge in relation to the peripheral surface of the shank part as defined above, imply that the milling tool may be used for chamfering the flank edges of internal or external teeth on a cylindrical toothed workpiece at both end faces of the workpiece without requiring any repositioning of the workpiece. The above-mentioned first cutting edge may be used for chamfering the flank edges of the teeth on a toothed workpiece at an end face of the workpiece facing away from a workpiece holder that carries the workpiece, and the above-mentioned second cutting edge may be used for chamfering the flank edges of the teeth on the workpiece at the opposite end face of the workpiece.

The above-mentioned internal or external teeth on the workpiece are preferably gear teeth or spline teeth, preferably of module 2-12.

The radial distance between the rear end of the second cutting edge and the radially outermost part of the peripheral surface of the shank part has to be suitably adapted to the tooth depth of the teeth on the toothed workpiece to be machined and is preferably 2-40 mm, more preferably 6-30 mm. Said radial distance is with advantage larger than the tooth depth but may as an alternative, in view of the extension of the second cutting edge in radial direction, be somewhat smaller that the tooth depth. In the case when the tool body comprises a front part that projects from the cutting part on the side thereof facing away from the rear part, the radial distance between the front end of the first cutting edge and a radially outermost part of a peripheral surface of this front part is preferably 2-40 mm, more preferably 6-30 mm, and preferably but not necessarily equal to the radial distance between the rear end of the second cutting edge and the radially outermost part of the peripheral surface of the shank part.

According to an embodiment of the invention, the first cutting edge extends substantially rectilinearly in a third plane that contains the axis of rotation, and the second cutting edge extends substantially rectilinearly in a fourth plane that contains the axis of rotation. The fourth plane may be angularly offset from the third plane with respect to the axis of rotation. However, the fourth plane preferably coincides with the third plane. The first and second cutting edges have such an inclination in the third plane and the fourth plane, respectively, that an extension of the first cutting edge forms a first angle with the axis of rotation and an extension of the second cutting edge forms a second angle with the axis of rotation. The first and second cutting edges may have such inclinations that the first and second angles differ from each other. However, the first and second cutting edges preferably have such inclinations that first and second angles are substantially equal. The first and second angles are with advantage larger than or equal to 20° and smaller than 90°, preferably 30-80°.

Another embodiment of the invention is characterized in:
- that the first cutting edge is formed at an intersection between a first surface on the cutting part and a second surface on the cutting part, wherein the first surface and the second surface are mirror symmetrical to each other with respect to the above-mentioned third plane; and
- that the second cutting edge is formed at an intersection between a third surface on the cutting part and a fourth surface on the cutting part, wherein the third surface and the fourth surface are mirror symmetrical to each other with respect to the above-mentioned fourth plane.

The cutting performance of each cutting edge will hereby be the same in both directions of rotation of the milling tool. When chamfering is performed by the first cutting edge, said first surface has the function of a rake face and said second surface has the function of a clearance face when the milling tool is rotated in one direction of rotation, whereas the first surface has the function of a clearance face and the second surface has the function of a rake face when the direction of rotation is changed. When chamfering is performed by the second cutting edge, said third surface has the function of a rake face and said fourth surface has the function of a clearance face when the milling tool is rotated in one direction of rotation, whereas the third surface has the function of a clearance face and the fourth surface has the function of a rake face when the direction of rotation is changed.

The first cutting edge and the second cutting edge are preferably mirror symmetrical to each other with respect to a plane of symmetry that extends halfway between the first and second cutting edges perpendicularly to the axis of rotation.

According to another embodiment of the invention, the cutting part comprises a holder arm that projects in radial direction in relation to the axis of rotation beyond the radially outermost part of the peripheral surface of the shank part, wherein the holder arm has an inner end facing the axis of rotation, i.e. a radially inner end, and an opposite outer end, i.e. a radially outer end, and wherein the first and second cutting edges are arranged on the holder arm at the outer end thereof. As an alternative, the cutting part may comprise a disc-shaped holder that projects in radial direction in relation to the axis of rotation beyond the radially outermost part of the peripheral surface of the shank part, wherein the first and second cutting edges are arranged on the disc-shaped holder at an outer periphery thereof.

According to another embodiment of the invention, the first and second cutting edges form part of a cutting insert that is releasably mounted to an insert seat provided at the outer end of said holder arm or alternatively at the outer periphery of said disc-shaped holder. Hereby, a cutting insert may easily be replaced by a new one when any of the first and second cutting edges has been worn out.

According to another embodiment of the invention, the cutting part comprises a base, which carries the holder arm and which is slidably mounted to the shank part at the front end thereof so as to be linearly slidable in relation to the shank part perpendicularly to the axis of rotation and in a longitudinal direction of the holder arm, wherein the base is lockable to the shank part in different sliding positions in relation to the shank part to thereby allow an adjustment of the radial distance between the first cutting edge and the axis of rotation and the radial distance between the second cutting edge and the axis of rotation.

The shank part is preferably rod-shaped and is to be longer than the length of the workpiece, i.e. longer than the axial distance between the two opposite end faces of the workpiece. The shank part may for instance have a length of 25-500 mm, preferably 50-200 mm, more preferably 100-150 mm.

According to another embodiment of the invention, the cutting part is detachably mounted to the shank part at the front end thereof. In this case, it is for instance possible to provide several cutting parts with holder arms of different lengths to thereby allow the milling tool to be easily adapted to the tooth depth of the teeth on the toothed workpiece to be machined by mounting of a cutting part with a holder arm of a suitable length to the shank part.

Further advantageous features of the milling tool according to the present invention will appear from the description following below.

According to a second aspect of the invention, said object is achieved by means of a method having the features defined in claim 13.

The method according to the second aspect of the invention is a method for chamfering flank edges of internal or external teeth on a cylindrical toothed workpiece at a first end face of the workpiece and at an opposite second end face of the workpiece, wherein each tooth on the workpiece has a tooth tip, a tooth root, a first tooth flank surface extending between the tooth tip and the tooth root on a first side of the tooth and a second tooth flank surface extending between the tooth tip and the tooth root on an opposite second side of the tooth, a first flank edge being formed at an intersection between the first tooth flank surface and the first end face of the workpiece, a second flank edge being formed at an intersection between the second tooth flank surface and the first end face of the workpiece, a third flank edge being formed at an intersection between the first tooth flank surface and the second end face of the workpiece and a fourth flank edge being formed at an intersection between the second tooth flank surface and the second end face of the workpiece, wherein the workpiece is attached to a machine and rotatable by the machine about a central axis of the workpiece and wherein the chamfering is performed by means of a milling tool according to the invention, which is attached to the machine and rotatable by the machine about the axis of rotation of the tool body and moveable by the machine in relation to the workpiece in the axial direction of the workpiece and in different directions in a plane perpendicular to the central axis of the workpiece with the axis of rotation of the tool body in parallel with the central axis of the workpiece, the method comprising the following steps:
a) positioning the milling tool in a first predefined position in relation to the workpiece with the axis of rotation of the tool body in parallel with the central axis of the workpiece and with the cutting part of the tool body adjacent to the first end face of the workpiece and with one of the first and second cutting edges of the at least one pair of cutting edges facing this first end face;
b) rotating the milling tool about the axis of rotation of the tool body and simultaneously rotating the workpiece about its central axis with a predefined relationship between the speed of rotation of the milling tool and the speed of rotation of the workpiece, while keeping the axis of rotation of the tool body in parallel with the central axis of the workpiece and moving the milling tool along a predefined path in relation to the workpiece such that the cutting edge or cutting edges facing the first end face of the workpiece chamfers the first and second flank edges of the teeth on the workpiece;
c) moving the milling tool in relation to the workpiece to move the cutting edge or cutting edges facing the first end face of the workpiece out of contact with the workpiece;
d) moving the milling tool in relation to the workpiece to a second predefined position with the axis of rotation of the tool body in parallel with the central axis of the workpiece and with the cutting part of the tool body adjacent to the opposite second end face of the workpiece and with the other one of the first and second cutting edges of the at least one pair of cutting edges facing this second end face; and
e) rotating the milling tool about the axis of rotation of the tool body and simultaneously rotating the workpiece about its central axis with a predefined relationship between the speed of rotation of the milling tool and the speed of rotation of the workpiece, while keeping the axis of rotation of the tool body in parallel with the central axis of the workpiece and moving the milling tool along a predefined path in relation to the workpiece such that the cutting edge or cutting edges facing the second end face of the workpiece chamfers the third and fourth flank edges of the teeth on the workpiece.

With this method, the milling tool chamfers the flank edges of internal or external teeth on the cylindrical toothed workpiece at both end faces of the workpiece without requiring any repositioning of the workpiece. Thus, the workpiece may remain clamped to a suitable workpiece holder of the machine in one and the same orientation during the entire chamfering process, which saves time. The above-mentioned first cutting edge on the milling tool is used for chamfering the flank edges of the teeth on the workpiece at the end face of the workpiece that faces away from the workpiece holder that carries the workpiece in a rotatable manner, and the above-mentioned second cutting edge on the milling tool is used for chamfering the flank edges of the teeth on the workpiece at the opposite end face of the workpiece. The chamfering process may start with a chamfering of the flank edges at the end face of the workpiece that faces away from the workpiece holder and thereafter proceed with a chamfering of the flank edges at the end face of the workpiece that faces the workpiece holder. As an alternative, the chamfering process may start with a chamfering of the flank edges at the end face of the workpiece that faces the workpiece holder and thereafter proceed with a chamfering of the flank edges at the end face of the workpiece that faces away from the workpiece holder.

According to an embodiment of the invention, said predefined path for the movement of the milling tool in relation to the workpiece in step b comprises at least one part in which the milling tool is moved in its axial direction to thereby move the cutting edge or cutting edges facing the first end face of the workpiece in a direction towards this first end face, and/or said predefined path for the movement of the milling tool in relation to the workpiece in step e comprises at least one part in which the milling tool is moved in its axial direction to thereby move the cutting edge or cutting edges facing the second end face of the workpiece in a direction towards this second end face.

According to another embodiment of the invention, said predefined path for the movement of the milling tool in relation to the workpiece in step b comprises at least one part in which the distance between the axis or rotation of the tool body and the central axis of the workpiece is changed, and/or said predefined path for the movement of the milling tool in relation to the workpiece in step e comprises at least one part in which the distance between the axis or rotation of the tool body and the central axis of the workpiece is changed. The change of the distance between the axis or rotation of the tool body and the central axis of the workpiece may be achieved by moving the milling tool in directions perpendicular to the axis of rotation of the tool body and/or by moving the workpiece in directions perpendicular to the central axis of the workpiece.

The predefined path for the movement of the milling tool in relation to the workpiece in step b and/or step e may of course also comprise one or more parts in which the milling tool is moved in its axial direction at the same time as the distance between the axis or rotation of the tool body and the central axis of the workpiece is changed.

According to another embodiment of the invention:
- the first flank edges and the second flank edges of the teeth on the workpiece are each chamfered in a machining direction from the tooth root to the tooth tip of the associated tooth in step b, and
- the third flank edges and the fourth flank edges of the teeth on the workpiece are each chamfered in a machining direction from the tooth root to the tooth tip of the associated tooth in step e.

Thus, the chamfering of each flank edge is started at the deepest part of the gap between two teeth, i.e. at the so-called bottom land or tooth root surface, and ended at the tooth tip of the associated tooth. It has turned out that burr formation may occur at the tooth root area when chamfering of a flank edge is performed in a machining direction from the tooth tip to the tooth root, especially with a cutting edge that has been in use for a while and has started to get worn. It has also turned out that such burr formation is avoided when the chamfering of a flank edge is performed in the opposite machining direction from the tooth root to the tooth tip. Thus, a chamfering of each flank edge of the teeth on the workpiece in a machining direction from the tooth root to the tooth tip results in improved quality of the chamfers produced on the flank edges.

In order to achieve a chamfering of each one of the first and second flank edges of the teeth on the workpiece in a machining direction from the tooth root to the tooth tip, according to a further one embodiment, step b comprises the following substeps:
b1) chamfering the first flank edges of the teeth on the workpiece, while rotating the workpiece about its central axis in a first direction of rotation with the second tooth flank surfaces as leading tooth flank surfaces and with the first tooth flank surfaces as trailing tooth flank surfaces, and while rotating the milling tool about the axis of rotation of the tool body in the same direction of rotation as the workpiece when the first flank edges that are being chamfered are flank edges of internal teeth on the workpiece or in an opposite direction of rotation when the first flank edges that are being chamfered are flank edges of external teeth on the workpiece, and
b2) chamfering the second flank edges of the teeth on the workpiece, while rotating the workpiece about its central axis in a second direction of rotation opposite to the first direction of rotation, and while rotating the milling tool about the axis of rotation of the tool body in the same direction of rotation as the workpiece when the second flank edges that are being chamfered are flank edges of internal teeth on the workpiece or in an opposite direction of rotation when the second flank edges that are being chamfered are flank edges of external teeth on the workpiece.

In this description and the subsequent claims, the expression "leading tooth flank surfaces" refers to the tooth flank surfaces that are facing in the direction of rotation, i.e. forwards, when the toothed workpiece is rotated about its central axis, whereas the expression "trailing tooth flank surfaces" refers to the tooth flank surfaces that are facing in the opposite direction, i.e. backwards, when the toothed workpiece is rotated about its central axis.

In order to achieve a chamfering of each one of the third and fourth flank edges of the teeth on the workpiece in a machining direction from the tooth root to the tooth tip, according to a further one embodiment, step e comprises the following substeps:
e1) chamfering the third flank edges of the teeth on the workpiece, while rotating the workpiece about its central axis in the first direction of rotation, and while rotating the milling tool about the axis of rotation of the tool body in the same direction of rotation as the workpiece when the third flank edges that are being chamfered are flank edges of internal teeth on the workpiece or in an opposite direction of rotation when the third flank edges that are being chamfered are flank edges of external teeth on the workpiece, and
e2) chamfering the fourth flank edges of the teeth on the workpiece, while rotating the workpiece about its central axis in the second direction of rotation, and while rotating the milling tool about the axis of rotation of the tool body in the same direction of rotation as the workpiece when the fourth flank edges that are being chamfered are flank edges of internal teeth on the workpiece or in an opposite direction of rotation when the fourth flank edges that are being chamfered are flank edges of external teeth on the workpiece.

The above-mentioned substeps are preferably carried out in the following order: b1-b2-e1-e2, wherein the direction of rotation of the milling tool and the workpiece is reversed between substeps b1 and b2 and between substeps e1 and e2. However, these substeps may as an alternative be carried out in the following order: b1-e1-e2-b2, wherein the direction of rotation of the milling tool and the workpiece is reversed only between substeps e1 and e2.

According to a third aspect, the invention relates to a computer based program having instructions which when executed by a CNC machine causes the CNC machine to perform the steps according to any of the above described methods. Said computer program, or computer program product, may be included in a CAM-software product, i.e. a software for computer-aided manufacturing. Said computer program may be in the form of a computer readable medium such as a USB-stick, a CD-ROM or a data stream.

Further advantageous features of the method according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a milling tool according to an embodiment of the present invention,
- Fig 2: is a lateral view of the milling tool of Fig 1,
- Fig 3: is a front view of the milling tool of Fig 1,
- Figs 4a and 4b: are exploded perspective views from different directions of a part of the milling tool of Fig 1,
- Fig 5: is a rear view of a cutting part included in the milling tool of Fig 1,
- Fig 6: is a lateral view of the cutting part of Fig 5,
- Fig 7: is a perspective view of the cutting part of Fig 5,
- Fig 8: is a planar view of the cutting part of Fig 5,
- Fig 9a: is a perspective view of the milling tool of Fig 1 and an internally toothed workpiece, as seen with the milling tool in a position for chamfering flank edges at a first end face of the workpiece,
- Fig 9b: is a front view of the milling tool and workpiece of Fig 9a,
- Figs 10a and 10b: are perspective views from different directions of the milling tool and workpiece of Fig 9a, as seen with the milling tool in a position for chamfering flank edges at an opposite second end face of the workpiece,
- Fig 10c: is a front view of the milling tool and workpiece of Figs 10a and 10b,
- Fig 11: is a perspective view in larger scale of a part of the internally toothed workpiece of Fig 9a,
- Fig 12: is a font view in larger scale of a part of the internally toothed workpiece of Fig 9a,
- Fig 13: is a partly cut lateral view of the milling tool and a part of the workpiece of Fig 9a,
- Figs 14a-14e: are illustrations of different stages in a process of chamfering flank edges on an internally toothed workpiece by means of the milling tool of Fig 1,
- Fig 15a: is a perspective view of the milling tool of Fig 1 and an externally toothed workpiece, as seen with the milling tool in a position for chamfering flank edges at a first end face of the workpiece,
- Fig 15b: is a front view of the milling tool and workpiece of Fig 15a,
- Figs 16a and 16b: are perspective views from different directions of the milling tool and workpiece of Fig 15a, as seen with the milling tool in a position for chamfering flank edges at an opposite second end face of the workpiece,
- Fig 16c: is a front view of the milling tool and workpiece of Figs 16a and 16b, and
- Fig 17: is a lateral view of a milling tool according to an alternative embodiment of the invention.

### DETAILED DESCRIPTION OF EMBODIMENTS OF THE INVENTION

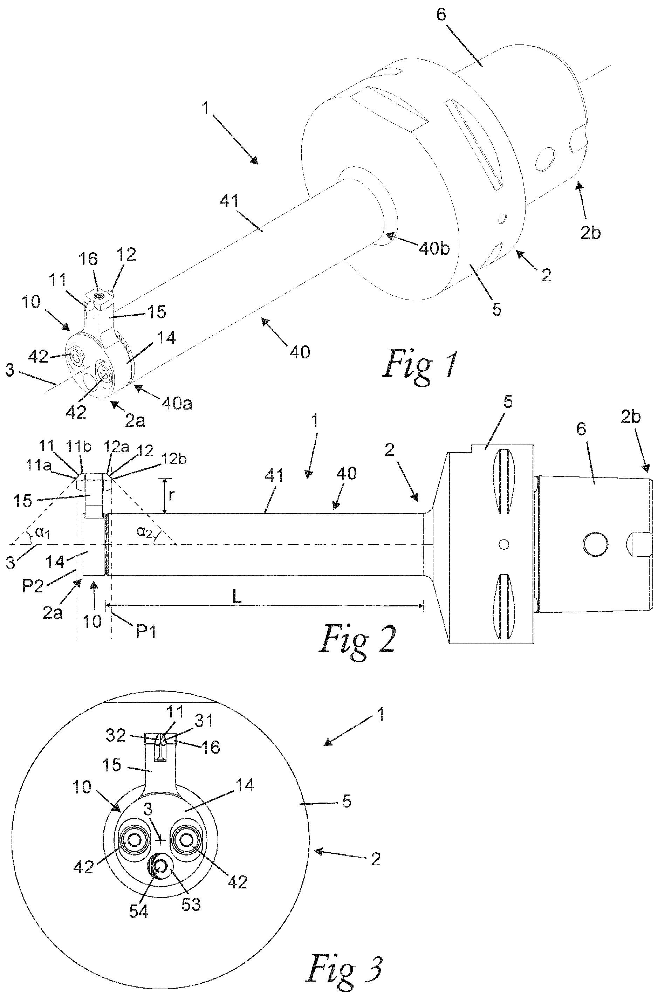

An embodiment of a milling tool 1 according to the present invention is illustrated in Figs 1-8. The milling tool 1 is to be used for chamfering flank edges of internal or external teeth on a cylindrical toothed workpiece at opposite end faces of the workpiece. The milling tool 1 comprises an elongated tool body 2, which is configured to be rotated about an axis of rotation 3. The tool body 2 has a front end 2a and an opposite rear end 2b. In the illustrated embodiment, a collar 5 is provided on the tool body 2. A rear part 6 of the tool body 2 located between the collar 5 and the rear end 2b forms a connection member, through which the tool body 2 is mountable, directly or via an intermediate tool holder, to a rotating spindle or the similar of a machine, for instance a milling machine. In the embodiments illustrated in the figures, the rear part 6 is Coromant Capto^{®} of the size C8. Other Coromant Capto^{®} sizes that may be used are sizes C3-C10. The rear part 6 may be any other connection member suitable for such a purpose, such as HSK.

The tool body 2 comprises a cutting part 10, which is located at a distance from the rear part 6 and which is provided with cutting edges 11, 12. The tool body 2 further comprises an elongated shank part 40, which carries the cutting part 10 and extends from the cutting part 10 towards the rear part 6. The shank part 40 has a front end 40a facing the cutting part 10 and an opposite rear end 40b facing the collar 5 and the rear part 6. The cutting part 10 is mounted to the shank part 40 at the front end 40a thereof. The shank part 40 has a peripheral surface 41, which extends around the shank part 40 between the rear end 40b and the front end 40a thereof. The shank part 40 has a longitudinal central axis that coincides with an axis of rotation 3 of the tool body 2.

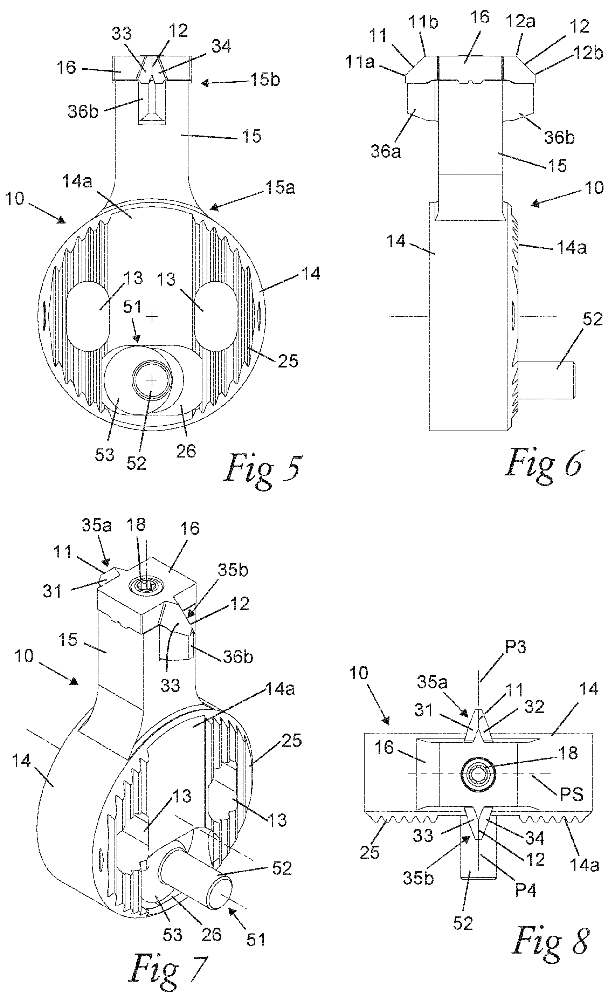

The cutting part 10 is provided with one pair of cutting edges consisting of a first cutting edge 11, which faces away from the rear part 6 of the tool body, and a second cutting edge 12, which faces the rear part 6 of the tool body and which is located closer to the rear part 6 than the first cutting edge 11. Thus, the first cutting edge 11 is more distant from the rear part 6 of the tool body than the second cutting edge 12. Each one of the first and second cutting edges 11, 12 has a front end 11a, 12a and an opposite rear end 11b, 12b. The rear end 11b of the first cutting edge 11 is located closer to the rear part 6 of the tool body than the front end 11a of the first cutting edge and the rear end 12b of the second cutting edge 12 is located closer to the rear part 6 of the tool body than the front end 12a of the second cutting edge. The front end 11a of the first cutting edge 11 is located closer to the axis of rotation 3 than the rear end 11b of the first cutting edge and the distance between the first cutting edge 11 and the axis of rotation 3 is gradually increasing as seen in a direction along the first cutting edge 11 from the front end 11a thereof to the rear end 11b thereof, as illustrated in Figs 2 and 6. The rear end 12b of the second cutting edge 12 is located closer to the axis of rotation 3 than the front end 12a of the second cutting edge and the distance between the second cutting edge 12 and the axis of rotation 3 is gradually increasing as seen in a direction along the second cutting edge 12 from the rear end 12b thereof to the front end 12a thereof. Furthermore, the rear end 12b of the second cutting edge 12 is located at a longer distance from the axis of rotation 3 than the radially outermost part of the peripheral surface 41 of the shank part 40.

The cutting part 10 could also be provided with two or more pairs of cutting edges 11, 12 of the type described above.

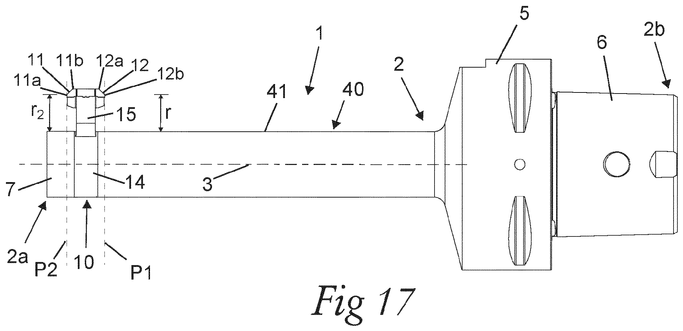

The cutting part 10 has an extension in the axial direction of the tool body 2 limited to an area between a first plane P1 (see Fig 2) that extends perpendicularly to the axis of rotation 3 and intersects the rear end 12b of the second cutting edge 12 and a second plane P2 that extends perpendicularly to the axis of rotation 3 and intersects the front end 11a of the first cutting edge 11. In the embodiment illustrated in Figs 1-8, the tool body 2 does not have any part that extends axially beyond the cutting part 10. Thus, in this case, the cutting part 10 constitutes the axially foremost part of the tool body 2, i.e. the part of the tool body 2 that is most distant from the rear part 6. The tool body 2 may as an alternative also comprise a front part 7 that is connected to the cutting part 10 and projects from the cutting part on the side thereof facing away from the rear part 6, as illustrated in Fig 17. In this case, the front end 11a of the first cutting edge 11 is to be located at a longer distance from the axis of rotation 3 than a radially outermost part of a peripheral surface of said front part 7.

The radial distance r between the rear end 12b of the second cutting edge 12 and the radially outermost part of the peripheral surface 41 of the shank part 40 is preferably 2-40 mm, more preferably 6-30 mm. In the embodiment illustrated in Fig 17, radial distance r₂ between the front end 11a of the first cutting edge 11 and the radially outermost part of the peripheral surface of the front part 7 is preferably 2-40 mm, more preferably 6-30 mm.

In the illustrated embodiments, the shank part 40 is rod-shaped and has the form of a right circular cylinder. However, the shank part 40 may also have any other suitable shape. The shank part 40 has a length L of 25-500 mm, preferably 50-200 mm, more preferably 100-150 mm.

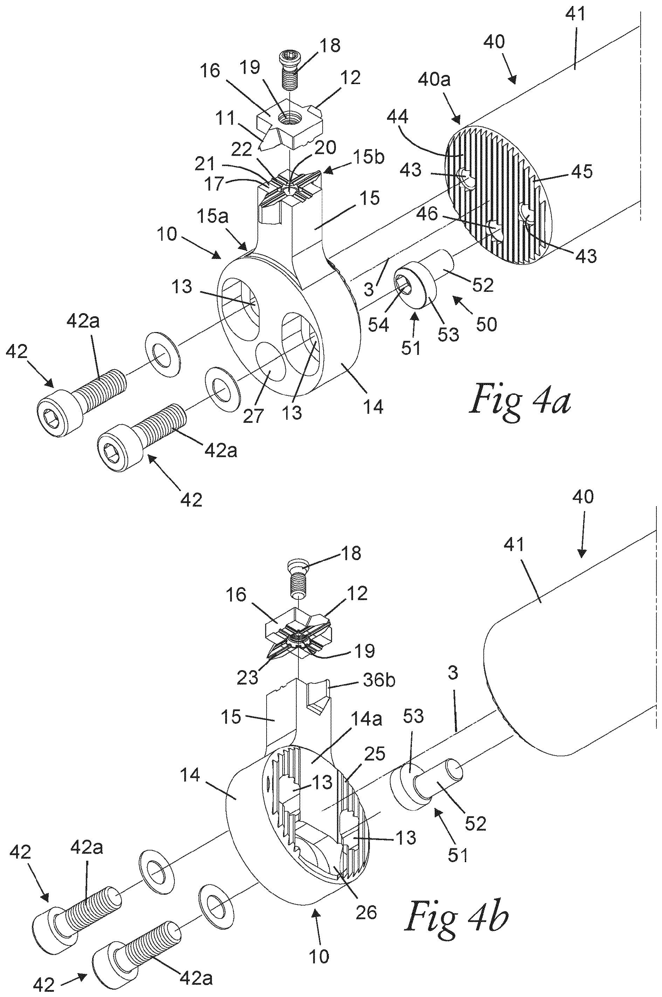

The cutting part 10 may be permanently fixed to the shank part 40. However, in the embodiment illustrated in Figs 1-8, the cutting part 10 is detachably mounted to the shank part 40 at the front end 40a thereof by means of fastening elements 42 in the form of two screws, which extend through a respective through hole 13 in the cutting part 10 and are engaged in a respective threaded hole 43 (see Fig 4a) provided in a front end face 44 of the shank part 40.

In the illustrated embodiments, the cutting part 10 comprises a base 14, through which the cutting part 10 is mounted to the shank part 40, and holder arm 15, which is fixed to the base 14 and projects from the base 14 in radial direction in relation to the axis of rotation 3 beyond the radially outermost part of the peripheral surface 41 of the shank part 40. The holder arm 15 has an inner end 15a facing the axis of rotation 3 and an opposite outer end 15b. The holder arm 15 is fixed to the base 14 at its inner end 15a and the first and second cutting edges 11, 12 are arranged on the holder arm 15 at the outer end 15b thereof. In the illustrated embodiments, the first and second cutting edges 11, 12 form part of a cutting insert 16 that is releasably mounted to an insert seat 17 provided at the outer end 15b of the holder arm 15. The illustrated cutting insert 16 is releasably fixed to the insert seat 17 by means of a fastening element 18 in the form of a screw, which extends through a through hole 19 in the cutting insert 16 and is engaged in a threaded hole 20 (see Fig 4a) in a support surface 21 in the insert seat 17. The support surface 21 is with advantage provided with splines 22 or the similar configured for positive mechanical engagement with corresponding splines 23 on an underside of the cutting insert 16 in order to ensure a correct positioning of the cutting insert 16 in the insert seat 17 and prevent the cutting insert 16 from moving in relation to the support surface 21 when properly mounted to the insert seat 17.

The base 14 and the shank part 40 are with advantage formed as separate components, wherein the base 14 may be detachably mounted the shank part 40. However, the base 14 and the shank part 40 may as an alternative be formed in one piece. In a corresponding manner, the front part 7 and the base 14 included in the milling tool 1 illustrated in Fig 17 may be formed in one piece or formed as separate components that are mounted to each other.

In the embodiment illustrated in Figs 1-8, the base 14 is slidably mounted to the shank part 40 at the front end 40a thereof so as to be linearly slidable in relation to the shank part 40 perpendicularly to the axis of rotation 3 and in the longitudinal direction of the holder arm 15, wherein the base 14 is lockable to the shank part 40 in different sliding positions in relation to the shank part 40 to thereby allow an adjustment of the radial distance between the first cutting edge 11 and the axis of rotation 3 and the radial distance between the second cutting edge 12 and the axis of rotation 3. Thus, by adjustment of the position of the base 14 in relation to the skank part 40, it will be possible to adjust the above-mentioned radial distance r between the rear end 12b of the second cutting edge 12 and the radially outermost part of the peripheral surface 41 of the shank part 40. In the illustrated example, a rear face 14a of the base 14 is provided with mutually parallel splines 25, which extend in parallel with a longitudinal axis of the holder arm 15 and which are in slidable engagement with corresponding splines 45 provided on the front end face 44 of the shank part 40 in order to allow the base 14 to slide in the desired direction in relation to the shank part 40 during the adjustment of the sliding position of the base 14 in relation to the shank part 40.

The milling tool 1 illustrated in Figs 1-8 comprises an adjustment mechanism 50, by means of which the sliding position of the base 14 in relation to the shank part 40 is adjustable. Thus, the exact positioning of the base 14 along the splines 45 on the front end face 44 of the shank part 40 is adjustable by means of the adjustment mechanism 50. In the illustrated embodiment, the adjustment mechanism 50 comprises an adjustment element 51, which is configured to act between the base 14 and the shank part 40. This adjustment element 51 comprises a pin 52, which is rotatably received in a hole 46 provided in the front end face 44 of the shank part 40, and a head 53, which is fixed to the pin 52 and rotatably received in a recess 26 provided in the rear face 14a of the base 14. The axis of rotation of the pin 52 is parallel to but offset from the axis of rotation of the head 53 such that a rotation of the head 53 in the recess 26 will effect a sliding movement of the base 14 in the longitudinal direction of the splines 25, 45. A socket 54 designed for releasable engagement with a torque tool (not shown) is provided in a front face of the head 53 so as to allow a torque tool to be connected to the head 53 when the head 53 is to be rotated in order to make it move the base 14 in the longitudinal direction of the splines 25, 45. The socket 54 is accessible through a hole 27 in the base 14. The above-mentioned through holes 13 for the fastening elements 42 are provided in the base 14. Each one of these trough holes 13 has an elongated cross-sectional shape with a longer axis extending substantially in the longitudinal direction of the splines 25 to thereby allow the base 14 to move perpendicularly to the shafts 42a of the fastening elements 42 in the longitudinal direction of the splines 45 on the front end face 44 of the shank part 40. The base 14 is lockable to the shank part 40 in a desired sliding position in relation to the shank part 40 by tightening of the fastening elements 42. The adjustment mechanism 50 may of course also be designed in any other suitable manner.

In the embodiment illustrated in Figs 1-8, the first cutting edge 11 extends substantially rectilinearly in a third plane P3 (see Fig 8) that contains the axis of rotation 3 and the second cutting edge 12 extends substantially rectilinearly in a fourth plane P4 that contains the axis of rotation 3. The fourth plane P4 preferably coincides with the third plane P3, as illustrated in Fig 8, but the third and fourth planes P3, P4 could as an alternative be angularly offset from each other with respect to the axis of rotation 3 of the tool body 2. The first cutting edge 11 has such an inclination in the third plane P3 that an extension of the first cutting edge 11 forms a first angle α₁ (see Fig 2) with the axis of rotation 3, and the second cutting edge 12 has such an inclination in the fourth plane P4 that an extension of the second cutting edge 12 forms a second angle α₂ with the axis of rotation. The first and second angles α₁, α₂ are preferably equal or at least substantially equal. The first angle α₁ and the second angle α₂ are larger than or equal to 20° and smaller than 90°, preferably 30-80°. In the illustrated embodiment, the first angle α₁ and the second angle α₂ are both approximately 45°.

In the embodiment illustrated in Figs 1-8, the first cutting edge 11 is formed at an intersection between a first surface 31 and a second surface 32 on the cutting insert 16 and the second cutting edge 12 is formed at an intersection between a third surface 33 and a fourth surface 34 on the cutting insert 16, wherein the first and second surfaces 31, 32 are mirror symmetrical to each other with respect to the third plane P3 and wherein the third and fourth surfaces 33, 34 are mirror symmetrical to each other with respect to the fourth plane P4. Furthermore, the first cutting edge 11 and the second cutting edge 12 are here mirror symmetrical to each other with respect to a plane of symmetry PS (see Fig 8) that extends halfway between the first and second cutting edges 11, 12 perpendicularly to the axis of rotation 3 of the tool body 2. The first and second surfaces 31, 32 are inclined in relation to each other and diverge from each other in a direction from the first cutting edge 11 towards the axis or rotation 3, wherein the first and second surfaces 31, 32 form a first nose-shaped projection 35a on the cutting insert 16. In the corresponding manner, the third and fourth surfaces 33, 34 are inclined in relation to each other and diverge from each other in a direction from the second cutting edge 12 towards the axis or rotation 3, wherein the third and fourth surfaces 33, 34 form a second nose-shaped projection 35b on the cutting insert 16. A first projection 36a in provided on a first side of the holder arm 15 at the outer end 15b thereof in order to form a support for the first nose-shaped projection 35a on the cutting insert 16 and a second projection 36b in provided on an opposite second side of the holder arm 15 at the outer end 15b thereof in order to form a support for the second nose-shaped projection 35b on the cutting insert 16.

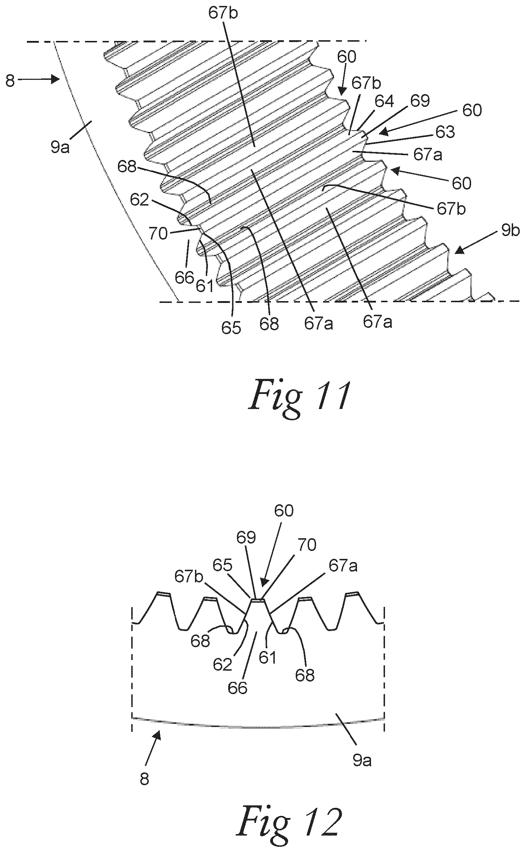

As mentioned above, the milling tool 1 is to be used for chamfering flank edges 61-64 (see Figs 11 and 12) of internal or external teeth 60 on a cylindrical toothed workpiece 8 at a first end face 9a of the workpiece and at an opposite second end face 9b of the workpiece. Each tooth 60 on the workpiece 8 has a tooth tip 65, a tooth root 66, a first tooth flank surface 67a extending between the tooth tip 65 and the tooth root 66 on a first side of the tooth and a second tooth flank surface 67b extending between the tooth tip 65 and the tooth root 66 on an opposite second side of the tooth. A first flank edge 61 is formed at an intersection between the first tooth flank surface 67a and the first end face 9a of the workpiece 8, a second flank edge 62 is formed at an intersection between the second tooth flank surface 67b and the first end face 9a of the workpiece 8, a third flank edge 63 is formed at an intersection between the first tooth flank surface 67a and the second end face 9b of the workpiece 8 and a fourth flank edge 64 is formed at an intersection between the second tooth flank surface 67b and the second end face 9b of the workpiece 8. A bottom land 68 is provided between the tooth roots 66 of every two adjacent teeth 60 and a top land 69 is provided at the tooth tip 65 of each tooth 60.

The edges 70 at the interfaces between the top land 69 of each tooth 60 on the workpiece 8 and the respective end face 9a, 9b of the workpiece are normally chamfered in a separate machining operation before the chamfering of the flank edges 61-64 is carried out by means of the milling tool 1.

During the performance of a chamfering operation with the use of the milling tool 1, the workpiece 8 is attached to a rotatable workpiece holder (not shown) of a machine and rotatable by the machine about a central axis 4 of the workpiece 8, wherein the milling tool 1 is attached to a rotatable tool holder (not shown) of the machine and rotatable by the machine about the axis of rotation 3 of the tool body 2 and moveable by the machine in relation to the workpiece 8 in the axial direction z of the workpiece 8 and in different directions in a plane x, y perpendicular to the central axis 4 of the workpiece 8 with the axis of rotation 3 of the tool body 2 in parallel with the central axis 4 of the workpiece 8. The speed of rotation of the workpiece 8, the speed of rotation of the milling tool 1 and the movements of the milling tool 1 in relation to the workpiece 8 are controlled in a program-controlled manner by means of an electronic control device (not shown).

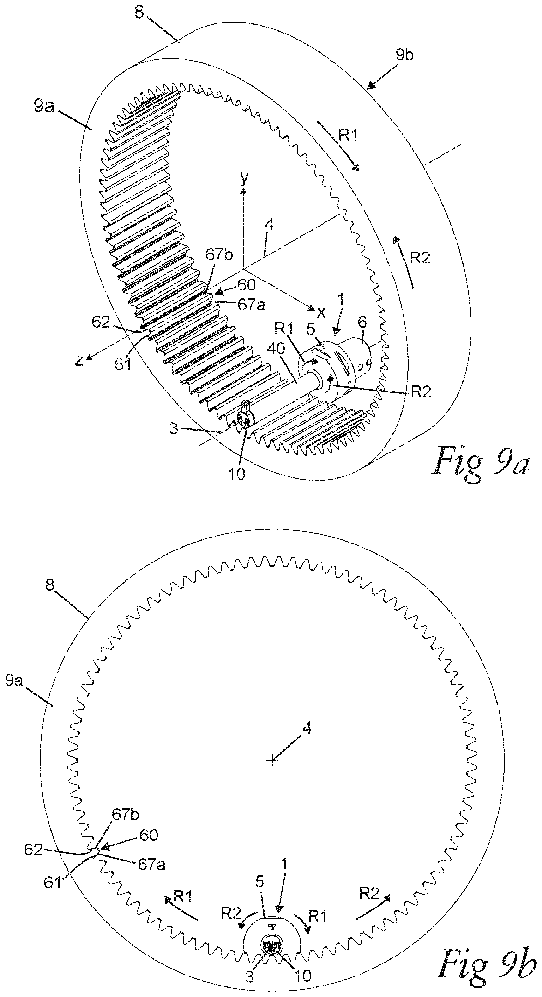

The workpiece holder and the tool holder of the machine are normally located opposite to each other with the tool holder facing the workpiece holder. In the examples illustrated in Figs 9-10 and Figs 15-16, the end face of the workpiece 8 referred to as the first end face 9a is facing the workpiece holder of the machine, wherein the opposite second end face 9b of the workpiece 8 is facing the tool holder of the machine.

The workpiece 8 is rotatable about its central axis 4 in a first direction of rotation R1 with the second tooth flank surfaces 67b of the teeth 60 on the workpiece as leading tooth flank surfaces and with the first tooth flank surfaces 67a of the teeth 60 on the workpiece as trailing tooth flank surfaces, and in a opposite second direction of rotation R2 with the first tooth flank surfaces 67a of the teeth 60 on the workpiece as leading tooth flank surfaces and with the second tooth flank surfaces 67b of the teeth 60 on the workpiece as trailing tooth flank surfaces.

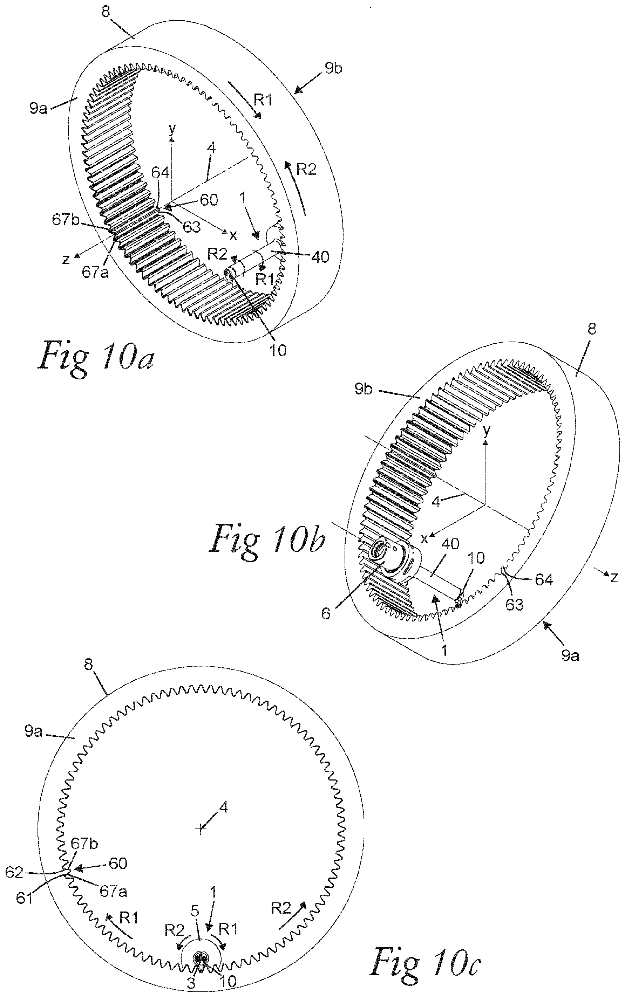

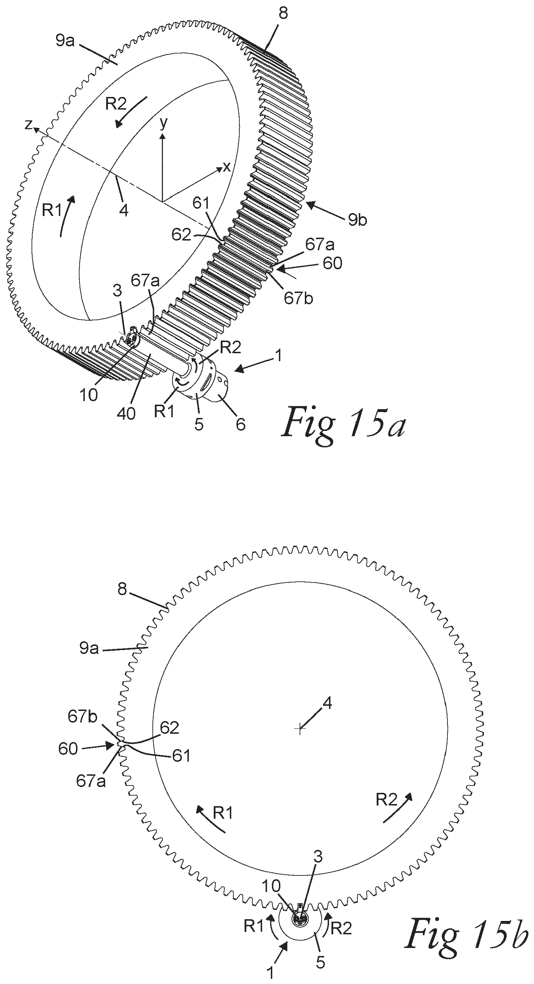

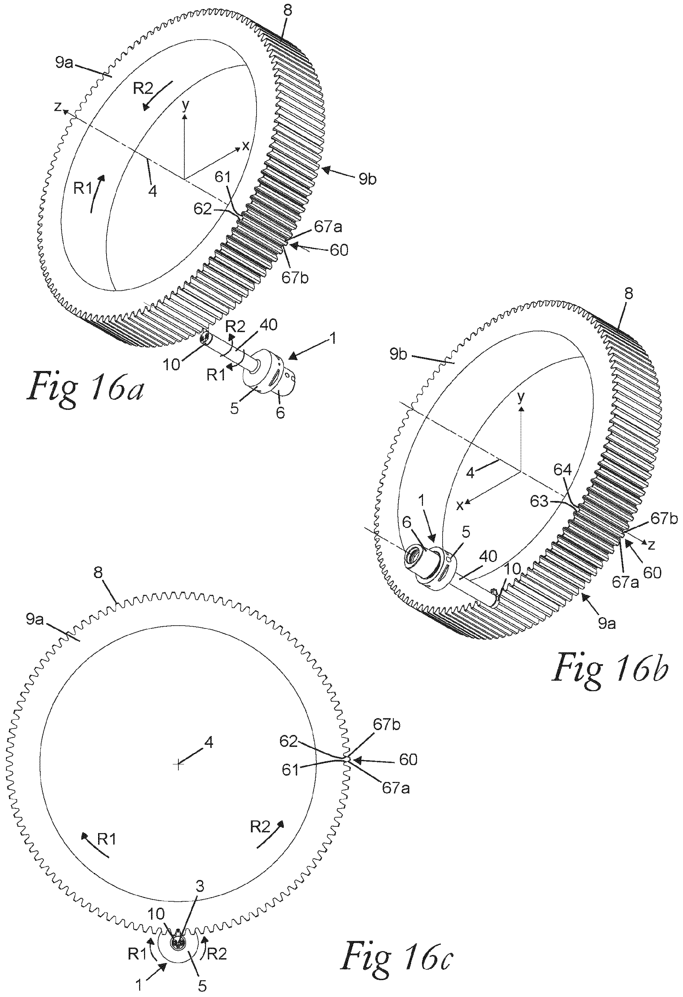

In order to perform a chamfering of all the flank edges 61-64 of the teeth 60 on the workpiece 8 by means of the milling tool 1, the following steps are performed:
a) the milling tool 1 is positioned in a first predefined position in relation to the workpiece 8 with the axis of rotation 3 of the tool body 2 in parallel with the central axis 4 of the workpiece 8 and with the cutting part 10 of the tool body 2 adjacent to the first end face 9a of the workpiece 8 and with the second cutting edge 12 facing this first end face 9a, as illustrated in Figs 9a and 15a;
b) the milling tool 1 is thereafter rotated about the axis of rotation 3 of the tool body 2 and the workpiece 8 is simultaneously rotated about its central axis 4 with a predefined relationship between the speed of rotation of the milling tool 1 and the speed of rotation of the workpiece 8, while keeping the axis of rotation 3 of the tool body 2 in parallel with the central axis 4 of the workpiece 8 and moving the milling tool 1 along a predefined path in relation to the workpiece 8 such that the second cutting edge 12 chamfers the first and second flank edges 61, 62 of the teeth 60 on the workpiece;
c) the milling tool 1 is thereafter moved in relation to the workpiece 8 to move the second cutting edge 12 out of contact with the workpiece 8;
d) the milling tool 1 is thereafter moved in relation to the workpiece 8 and positioned in a second predefined position in relation to the workpiece with the axis of rotation 3 of the tool body 2 in parallel with the central axis 4 of the workpiece 8 and with the cutting part 10 of the tool body 2 adjacent to the opposite second end face 9b of the workpiece 8 and with the first cutting edge 11 facing this second end face 9b, as illustrated in Figs 10a and 16a; and
e) the milling tool 1 is thereafter rotated about the axis of rotation 3 of the tool body 2 and the workpiece 8 is simultaneously rotated about its central axis 4 with a predefined relationship between the speed of rotation of the milling tool 1 and the speed of rotation of the workpiece 8, while keeping the axis of rotation 3 of the tool body 2 in parallel with the central axis 4 of the workpiece 8 and moving the milling tool 1 along a predefined path in relation to the workpiece 8 such that the first cutting edge 11 chamfers the third and fourth flank edges 63, 64 of the teeth 60 on the workpiece.

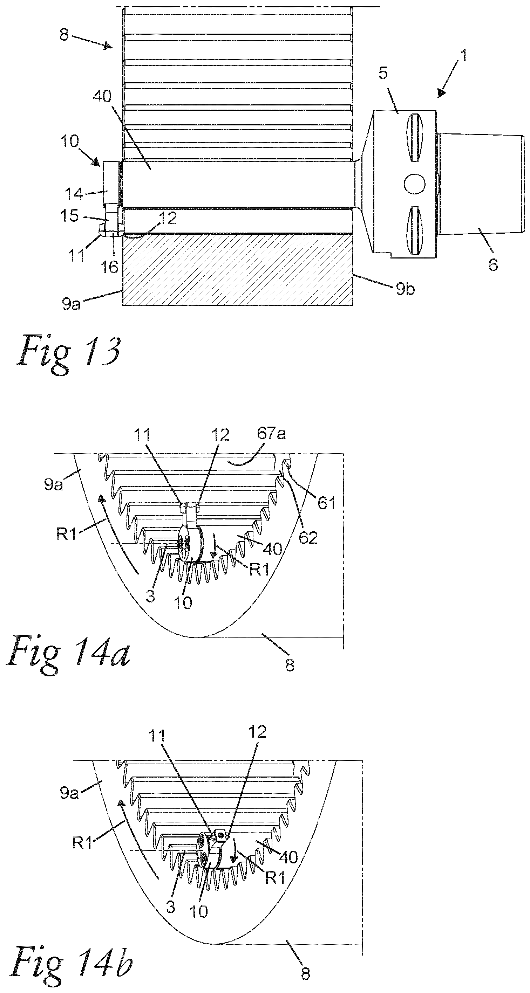

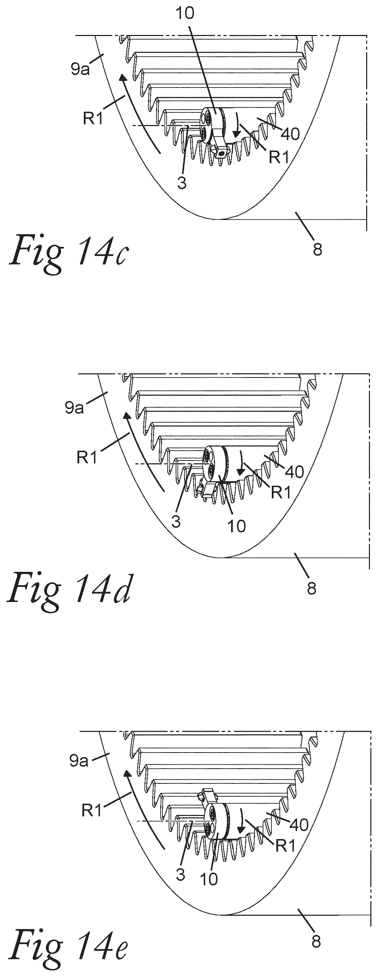

During the chamfering in the above-mentioned steps b and e, a part of the active one of the first and second cutting edges 11, 12 is rotated into a gap between two adjacent teeth 60 and is thereafter moved together with this gap in the direction of rotation of the workpiece 8 during a part of a revolution of the workpiece 8, while coming into cutting engagement with at least one section of one of the flank edges that are located on opposite sides of the gap, before being rotated out of the gap, as illustrated in Figs 14a-14e. Upon continued rotation of the milling tool 1, a part of the active one of the first and second cutting edges 11, 12 is rotated into a new gap between two other adjacent teeth 60 on the workpiece 8, and so on. By gradually moving the milling tool 1 in relation to the workpiece 8, during continued rotation of the milling tool 1 and the workpiece 8, such that the distance between the axis or rotation 3 of the tool body 2 and the central axis 4 of the workpiece 8 is changed, the active cutting edge 11, 12 may be made to come into cutting engagement with different sections of each flank edge that is being chamfered at different stages of the chamfering process until these flank edges have been chamfered along their entire extension.

The movement of the milling tool 1 in relation to the workpiece 8 in step b may start by first moving the milling tool 1 in its axial direction to thereby move the second cutting edge 12 in a direction towards the first end face 9a of the workpiece 8 such that the second cutting edge 12 makes contact with the workpiece 8 when the milling tool 1 rotates. The milling tool 1 may thereafter remain in this axial position in relation to the workpiece 8 during the remaining phase of step b to thereby achieve a chamfer of substantially constant width all along each flank edge that is being chamfered. However, the milling tool 1 may also be moved in its axial direction in relation to the workpiece 8 during at least a part of the remaining phase of step b to thereby achieve a chamfer of varying width along each flank edge that is being chamfered.

In the corresponding manner, the movement of the milling tool 1 in relation to the workpiece 8 in step e may start by first moving the milling tool 1 in its axial direction to thereby move the first cutting edge 11 in a direction towards the second end face 9b of the workpiece 8 such that the first cutting edge 11 makes contact with the workpiece 8 when the milling tool 1 rotates. The milling tool 1 may thereafter remain in this axial position in relation to the workpiece 8 during the remaining phase of step e to thereby achieve a chamfer of substantially constant width all along each flank edge that is being chamfered. However, the milling tool 1 may also be moved in its axial direction in relation to the workpiece 8 during at least a part of the remaining phase of step e to thereby achieve a chamfer of varying width along each flank edge that is being chamfered.

The relationship between the speed of rotation of the milling tool 1 and the speed of rotation of the workpiece 8 is to be so adapted that a part of the active cutting edge 11, 12 has entered the gaps between all teeth 60 on the workpiece 8 after a certain number of revolutions of the workpiece 8. In order to allow the active cutting edge to move in the same direction as the gap between two adjacent teeth 60 on the workpiece 8 with a part of the cutting edge received in the gap in question, the milling tool 1 has to be rotated about the axis of rotation 3 of the tool body 2 in the same direction of rotation as the workpiece 8 when flank edges 61-64 of internal teeth 60 on a workpiece are being chamfered and in a direction of rotation that is opposite to the direction of rotation of the workpiece 8 when flank edges 61-64 of external teeth 60 on a workpiece are being chamfered.

All flank edges 61-64 are preferably chamfered in a machining direction from the tooth root 66 to the tooth tip 65 of the associated tooth 60.

In order to achieve a chamfering of each one of the first and second flank edges 61 ,62 of the teeth 60 on the workpiece 8 in a machining direction from the tooth root 66 to the tooth tip 65, the above-mentioned step b comprises the following substeps:
b1) chamfering the first flank edges 61 of the teeth 60 on the workpiece 8, while rotating the workpiece about its central axis 4 in the above-mentioned first direction of rotation R1 and while rotating the milling tool 1 about the axis of rotation 3 of the tool body 2 in the same direction of rotation R1 as the workpiece 8 when the first flank edges 61 that are being chamfered are flank edges of internal teeth 60 on the workpiece 8 or in an opposite direction of rotation R2 when the first flank edges 61 that are being chamfered are flank edges of external teeth 60 on the workpiece 8; and
b2) chamfering the second flank edges 62 of the teeth 60 on the workpiece 8, while rotating the workpiece about its central axis 4 in the above-mentioned second direction of rotation R2, opposite to the first direction of rotation R1, and while rotating the milling tool 1 about the axis of rotation 3 of the tool body 2 in the same direction of rotation R2 as the workpiece 8 when the second flank edges 62 that are being chamfered are flank edges of internal teeth 60 on the workpiece 8 or in an opposite direction of rotation R1 when the second flank edges 62 that are being chamfered are flank edges of external teeth 60 on the workpiece 8.

In order to achieve a chamfering of each one of the third and fourth flank edges 63, 64 of the teeth 60 on the workpiece 8 in a machining direction from the tooth root 66 to the tooth tip 65, the above-mentioned step e comprises the following substeps:
e1) chamfering the third flank edges 63 of the teeth 60 on the workpiece 8, while rotating the workpiece about its central axis 3 in the first direction of rotation R1, and while rotating the milling tool 1 about the axis of rotation 3 of the tool body 2 in the same direction of rotation R1 as the workpiece 8 when the third flank edges 63 that are being chamfered are flank edges of internal teeth 60 on the workpiece 8 or in an opposite direction of rotation R2 when the third flank edges 63 that are being chamfered are flank edges of external teeth 60 on the workpiece 8; and
e2) chamfering the fourth flank edges 64 of the teeth 8 on the workpiece 8, while rotating the workpiece about its central axis 4 in the second direction of rotation R2, and while rotating the milling tool 1 about the axis of rotation 3 of the tool body 2 in the same direction of rotation R2 as the workpiece 8 when the fourth flank edges 64 that are being chamfered are flank edges of internal teeth 60 on the workpiece 8 or in an opposite direction of rotation R1 when the fourth flank edges 64 that are being chamfered are flank edges of external teeth 60 on the workpiece 8.

The invention is of course not in any way restricted to the embodiments described above. On the contrary, many possibilities to modifications thereof will be apparent to a person with ordinary skill in the art without departing the invention such as defined in the appended claims.

## Claims

1. A milling tool for chamfering flank edges (61-64) of internal or external teeth (60) on a cylindrical toothed workpiece (8) at opposite end faces (9a, 9b) of the workpiece (8), the milling tool (1) comprising an elongated tool body (2), which at a rear end (2b) has a rear part (6) configured for attachment to a machine and at a distance from the rear part (6) has a cutting part (10) provided with cutting edges (11, 12), wherein:
- the tool body (2) comprises an elongated shank part (40), which carries the cutting part (10) and extends from the cutting part (10) towards the rear part (6) and which has a front end (40a) facing the cutting part (10), an opposite rear end (40b) and a peripheral surface (41) extending around the shank part (40) between the rear end (40b) and the front end (40a) thereof, wherein the shank part (40) has a longitudinal central axis that coincides with an axis of rotation (3) of the tool body (2); and wherein
- the cutting part (10) constitutes an axially foremost part of the tool body (2) or the tool body (2) comprises a front part (7) that projects from the cutting part (10) on the side thereof facing away from the rear part (6), wherein the front end (11a) of the first cutting edge (11) is located at a longer distance from the axis of rotation (3) than a radially outermost part of this front part (7), **characterised in**
- **that** the cutting part (10) is provided with at least one pair of cutting edges consisting of a first cutting edge (11) facing away from the rear part (6) and a second cutting edge (12) facing the rear part (6) and located closer to the rear part (6) than the first cutting edge (11), wherein:
• the first cutting edge (11) has a rear end (11b) and an opposite front end (11a), the rear end (11b) of the first cutting edge (11) being located closer to the rear part (6) of the tool body than the front end (11a) of the first cutting edge (11), wherein the front end (11a) of the first cutting edge (11) is located closer to the axis of rotation (3) than the rear end (11b) of the first cutting edge (11) and the distance between the first cutting edge (11) and the axis of rotation (3) is gradually increasing as seen in a direction along the first cutting edge (11) from the front end (11a) thereof to the rear end (11b) thereof, and
• the second cutting edge (12) has a front end (12a) and an opposite rear end (12b), the rear end (12b) of the second cutting edge (12) being located closer to the rear part (6) of the tool body than the front end (12a) of the second cutting edge (12), wherein the rear end (12b) of the second cutting edge (12) is located at a longer distance from the axis of rotation (3) than the radially outermost part of the peripheral surface (41) of the shank part (40), and wherein the rear end (12b) of the second cutting edge (12) is located closer to the axis of rotation (3) than the front end (12a) of the second cutting edge (12) and the distance between the second cutting edge (12) and the axis of rotation (3) is gradually increasing as seen in a direction along the second cutting edge (12) from the rear end (12b) thereof to the front end (12a) thereof;
- **that** the cutting part (10) has an extension in the axial direction of the tool body (2) limited to an area between a first plane (P1) that extends perpendicularly to the axis of rotation (3) and intersects the rear end (12b) of the second cutting edge (12) and a second plane (P2) that extends perpendicularly to the axis of rotation (3) and intersects the front end (11a) of the first cutting edge (11).

2. A milling tool according to claim 1, **characterized in:**
- **that** the first cutting edge (11) extends substantially rectilinearly in a third plane (P3) that contains the axis of rotation; and
- **that** the second cutting edge (12) extends substantially rectilinearly in a fourth plane (P4) that contains the axis of rotation (3), wherein the fourth plane (P4) preferably coincides with the third plane (P3).

3. A milling tool according to claim 2, **characterized in:**
- **that** the first cutting edge (11) has such an inclination in the third plane (P3) that an extension of the first cutting edge (11) forms a first angle (α₁) with the axis of rotation (3), which first angle (α₁) is larger than or equal to 20° and smaller than 90°, preferably 30-80°; and
- **that** the second cutting edge (12) has such an inclination in the fourth plane (P4) that an extension of the second cutting edge (12) forms a second angle (α₂) with the axis of rotation (3), which second angle (α₂) is larger than or equal to 20° and smaller than 90°, preferably 30-80°, wherein the first and second angles (α₁, α₂) preferably are substantially equal.

4. A milling tool according to any of claims 1-3, **characterized in:**
- **that** the first cutting edge (11) is formed at an intersection between a first surface (31) on the cutting part (10) and a second surface (32) on the cutting part (10), wherein the first surface (31) and the second surface (32) are mirror symmetrical to each other with respect to the third plane (P3); and
- **that** the second cutting edge (12) is formed at an intersection between a third surface (33) on the cutting part (10) and a fourth surface (34) on the cutting part (10), wherein the third surface (33) and the fourth surface (34) are mirror symmetrical to each other with respect to the fourth plane (P4).

5. A milling tool according to any of claims 1-4, **characterized in that** the first cutting edge (11) and the second cutting edge (12) are mirror symmetrical to each other with respect to a plane of symmetry (PS) that extends halfway between the first and second cutting edges (11, 12) perpendicularly to the axis of rotation (3).

6. A milling tool according to any of claims 1-5, **characterized in that** the radial distance (r) between the rear end (12b) of the second cutting edge (12) and the radially outermost part of the peripheral surface (41) of the shank part (40) is 2-40 mm, preferably 6-30 mm.

7. A milling tool according to any of claims 1-6, **characterized in that** the cutting part (10) comprises a holder arm (15) that projects in radial direction in relation to the axis of rotation (3) beyond the radially outermost part of the peripheral surface (41) of the shank part (40), wherein the holder arm (15) has an inner end (15a) facing the axis of rotation (3) and an opposite outer end (15b) and wherein the first and second cutting edges (11, 12) are arranged on the holder arm (15) at the outer end (15b) thereof.

8. A milling tool according to claim 7, **characterized in that** the first and second cutting edges (11, 12) form part of a cutting insert (16) that is releasably mounted to an insert seat (17) provided at the outer end (15b) of the holder arm (15).

9. A milling tool according to claim 7 or 8, **characterized in that** the cutting part (10) comprises a base (14), which carries the holder arm (15) and which is slidably mounted to the shank part (40) at the front end (40a) thereof so as to be linearly slidable in relation to the shank part (40) perpendicularly to the axis of rotation (3) and in a longitudinal direction of the holder arm (15), wherein the base (14) is lockable to the shank part (40) in different sliding positions in relation to the shank part (40) to thereby allow an adjustment of the radial distance between the first cutting edge (11) and the axis of rotation (3) and the radial distance between the second cutting edge (12) and the axis of rotation (3).

10. A milling tool according to any of claims 1-9, **characterized in that** the shank part (40) is rod-shaped.

11. A milling tool according to any of claims 1-10, **characterized in that** the shank part (40) has a length (L) of 25-500 mm, preferably 50-200 mm, more preferably 100-150 mm.

12. A milling tool according to any of claims 1-11, **characterized in that** the cutting part (10) is detachably mounted to the shank part (40) at the front end (40a) thereof.

13. A method for chamfering flank edges (61-64) of internal or external teeth (60) on a cylindrical toothed workpiece (8) at a first end face (9a) of the workpiece (8) and at an opposite second end face (9b) of the workpiece (8), wherein each tooth (60) on the workpiece (8) has a tooth tip (65), a tooth root (66), a first tooth flank surface (67a) extending between the tooth tip (65) and the tooth root (66) on a first side of the tooth and a second tooth flank surface (67b) extending between the tooth tip (65) and the tooth root (66) on an opposite second side of the tooth, a first flank edge (61) being formed at an intersection between the first tooth flank surface (67a) and the first end face (9a) of the workpiece (8), a second flank edge (62) being formed at an intersection between the second tooth flank surface (67b) and the first end face (9a) of the workpiece (8), a third flank edge (63) being formed at an intersection between the first tooth flank surface (67a) and the second end face (9b) of the workpiece (8) and a fourth flank edge (64) being formed at an intersection between the second tooth flank surface (67b) and the second end face (9b) of the workpiece (8), wherein the workpiece (8) is attached to a machine and rotatable by the machine about a central axis (4) of the workpiece (8) and wherein the chamfering is performed by means of a milling tool (1) according to any of claims 1-12, which is attached to the machine and rotatable by the machine about the axis of rotation (3) of the tool body (2) and moveable by the machine in relation to the workpiece (8) in the axial direction (z) of the workpiece (8) and in different directions in a plane (x, y) perpendicular to the central axis (4) of the workpiece (8) with the axis of rotation (3) of the tool body (2) in parallel with the central axis (4) of the workpiece (8), the method comprising the following steps:
a) positioning the milling tool (1) in a first predefined position in relation to the workpiece (8) with the axis of rotation (3) of the tool body (2) in parallel with the central axis (4) of the workpiece (8) and with the cutting part (10) of the tool body (2) adjacent to the first end face (9a) of the workpiece (8) and with one of the first and second cutting edges (11, 12) of the at least one pair of cutting edges facing this first end face (9a);
b) rotating the milling tool (1) about the axis of rotation (3) of the tool body (2) and simultaneously rotating the workpiece (8) about its central axis (4) with a predefined relationship between the speed of rotation of the milling tool (1) and the speed of rotation of the workpiece (8), while keeping the axis of rotation (3) of the tool body (2) in parallel with the central axis (4) of the workpiece (8) and moving the milling tool (1) along a predefined path in relation to the workpiece (8) such that the cutting edge or cutting edges facing the first end face (9a) of the workpiece (8) chamfers the first and second flank edges (61, 62) of the teeth (60) on the workpiece (8);
c) moving the milling tool (1) in relation to the workpiece (8) to move the cutting edge or cutting edges facing the first end face (9a) of the workpiece (8) out of contact with the workpiece (8);
d) moving the milling tool (1) in relation to the workpiece (8) to a second predefined position with the axis of rotation (3) of the tool body (2) in parallel with the central axis (4) of the workpiece (8) and with the cutting part (10) of the tool body (2) adjacent to the opposite second end face (9b) of the workpiece (8) and with the other one of the first and second cutting edges (11, 12) of the at least one pair of cutting edges facing this second end face (9b); and
e) rotating the milling tool (1) about the axis of rotation (3) of the tool body (2) and simultaneously rotating the workpiece (8) about its central axis (4) with a predefined relationship between the speed of rotation of the milling tool (1) and the speed of rotation of the workpiece (8), while keeping the axis of rotation (3) of the tool body (2) in parallel with the central axis (4) of the workpiece (8) and moving the milling tool (1) along a predefined path in relation to the workpiece (8) such that the cutting edge or cutting edges facing the second end face (9b) of the workpiece (8) chamfers the third and fourth flank edges (63, 64) of the teeth (60) on the workpiece (8).

14. A method according to claim 13, wherein said predefined path for the movement of the milling tool (1) in relation to the workpiece (8) in step b comprises at least one part in which the milling tool (1) is moved in its axial direction to thereby move the cutting edge or cutting edges facing the first end face (9a) of the workpiece (8) in a direction towards this first end face (9a), and/or wherein said predefined path for the movement of the milling tool (1) in relation to the workpiece (8) in step e comprises at least one part in which the milling tool (1) is moved in its axial direction to thereby move the cutting edge or cutting edges facing the second end face (9b) of the workpiece (8) in a direction towards this second end face (9b).

15. A method according to claim 13 or 14, wherein said predefined path for the movement of the milling tool (1) in relation to the workpiece (8) in step b comprises at least one part in which the distance between the axis or rotation (3) of the tool body (2) and the central axis (4) of the workpiece (8) is changed, and/or wherein said predefined path for the movement of the milling tool (1) in relation to the workpiece (8) in step e comprises at least one part in which the distance between the axis or rotation (3) of the tool body (2) and the central axis (4) of the workpiece (8) is changed.

16. A method according to any of claims 13-15, wherein:
- the first flank edges (61) and the second flank edges (62) of the teeth (60) on the workpiece (8) are each chamfered in a machining direction from the tooth root (66) to the tooth tip (65) of the associated tooth (60) in step b, and
- the third flank edges (63) and the fourth flank edges (64) of the teeth (60) on the workpiece (8) are each chamfered in a machining direction from the tooth root (66) to the tooth tip (65) of the associated tooth (60) in step e.

17. A method according to claim 16, wherein step b comprises the following substeps:
b1) chamfering the first flank edges (61) of the teeth (60) on the workpiece (8), while rotating the workpiece (8) about its central axis (4) in a first direction of rotation (R1) with the second tooth flank surfaces (67b) as leading tooth flank surfaces and with the first tooth flank surfaces (67a) as trailing tooth flank surfaces, and while rotating the milling tool (1) about the axis of rotation (3) of the tool body (2) in the same direction of rotation (R1) as the workpiece (8) when the first flank edges (61) that are being chamfered are flank edges of internal teeth (60) on the workpiece (8) or in an opposite direction of rotation (R2) when the first flank edges (61) that are being chamfered are flank edges of external teeth (60) on the workpiece (8), and
b2) chamfering the second flank edges (62) of the teeth (60) on the workpiece (8), while rotating the workpiece (8) about its central axis (4) in a second direction of rotation (R2) opposite to the first direction of rotation (R1), and while rotating the milling tool (1) about the axis of rotation (3) of the tool body (2) in the same direction of rotation (R2) as the workpiece (8) when the second flank edges (62) that are being chamfered are flank edges of internal teeth (60) on the workpiece (8) or in an opposite direction of rotation (R1) when the second flank edges (62) that are being chamfered are flank edges of external teeth (60) on the workpiece (8).

18. A method according to claim 17, wherein step e comprises the following substeps:
e1) chamfering the third flank edges (63) of the teeth (60) on the workpiece (8), while rotating the workpiece (8) about its central axis (4) in the first direction of rotation (R1), and while rotating the milling tool (1) about the axis of rotation (3) of the tool body (2) in the same direction of rotation (R1) as the workpiece (8) when the third flank edges (63) that are being chamfered are flank edges of internal teeth (60) on the workpiece (8) or in an opposite direction of rotation (R2) when the third flank edges (63) that are being chamfered are flank edges of external teeth (60) on the workpiece (8), and
e2) chamfering the fourth flank edges (64) of the teeth (60) on the workpiece (8), while rotating the workpiece (8) about its central axis (4) in the second direction of rotation (R2), and while rotating the milling tool (1) about the axis of rotation (3) of the tool body (2) in the same direction of rotation (R2) as the workpiece (8) when the fourth flank edges (64) that are being chamfered are flank edges of internal teeth (60) on the workpiece (8) or in an opposite direction of rotation (R1) when the fourth flank edges (64) that are being chamfered are flank edges of external teeth (60) on the workpiece (8).

19. A computer program having instructions which when executed by a CNC machine causes the CNC machine to perform the steps according to any of the claims 13-18.

## Patentansprüche

1. Fräswerkzeug zum Anfasen von Flankenkanten (61-64) von Innen- oder Außenzähnen (60) an einem zylindrischen verzahnten Werkstück (8) an gegenüberliegenden Stirnflächen (9a, 9b) des Werkstücks (8), wobei das Fräswerkzeug (1) einen länglichen Werkzeugkörper (2) umfasst, der an einem hinteren Ende (2b) einen hinteren Teil (6) aufweist, der zur Befestigung an einer Maschine eingerichtet ist, und in einem Abstand von dem hinteren Teil (6) einen Schneidteil (10) aufweist, der mit Schneidkanten (11, 12) versehen ist, wobei:
- der Werkzeugkörper (2) einen länglichen Schaftteil (40) umfasst, der den Schneidteil (10) trägt und sich von dem Schneidteil (10) in Richtung des hinteren Teils (6) erstreckt und der ein vorderes Ende (40a) aufweist, das dem Schneidteil (10) zugewandt ist, ein gegenüberliegendes hinteres Ende (40b) und eine Umfangsfläche (41), die sich um den Schaftteil (40) zwischen dessen hinterem Ende (40b) und vorderem Ende (40a) erstreckt, wobei der Schaftteil (40) eine Längsmittelachse aufweist, die mit einer Rotationsachse (3) des Werkzeugkörpers (2) zusammenfällt; und
wobei
- der Schneidteil (10) einen axial vordersten Teil des Werkzeugkörpers (2) bildet oder der Werkzeugkörper (2) einen Vorderteil (7) umfasst, der von dem Schneidteil (10) auf dessen von dem hinteren Teil (6) abgewandter Seite vorspringt, wobei das vordere Ende (11a) der ersten Schneidkante (11) in einem größeren Abstand von der Rotationsachse (3) angeordnet ist als ein radial äußerster Teil dieses Vorderteils (7),
**dadurch gekennzeichnet**
- **dass** der Schneidteil (10) mit mindestens einem Paar von Schneidkanten versehen ist, bestehend aus einer ersten Schneidkante (11), die von dem hinteren Teil (6) abgewandt ist, und einer zweiten Schneidkante (12), die dem hinteren Teil (6) zugewandt und näher an dem hinteren Teil (6) angeordnet ist als die erste Schneidkante (11), wobei:
• die erste Schneidkante (11) ein hinteres Ende (11b) und ein gegenüberliegendes vorderes Ende (11a) aufweist, wobei das hintere Ende (11b) der ersten Schneidkante (11) näher an dem hinteren Teil (6) des Werkzeugkörpers angeordnet ist als das vordere Ende (11a) der ersten Schneidkante (11), wobei das vordere Ende (11a) der ersten Schneidkante (11) näher an der Rotationsachse (3) angeordnet ist als das hintere Ende (11b) der ersten Schneidkante (11) und der Abstand zwischen der ersten Schneidkante (11) und der Rotationsachse (3), gesehen in einer Richtung entlang der ersten Schneidkante (11) von deren vorderem Ende (11a) zu deren hinterem Ende (11 b), allmählich zunimmt, und
• die zweite Schneidkante (12) ein vorderes Ende (12a) und ein gegenüberliegendes hinteres Ende (12b) aufweist, wobei das hintere Ende (12b) der zweiten Schneidkante (12) näher an dem hinteren Teil (6) des Werkzeugkörpers angeordnet ist als das vordere Ende (12a) der zweiten Schneidkante (12), wobei das hintere Ende (12b) der zweiten Schneidkante (12) in einem größeren Abstand von der Rotationsachse (3) angeordnet ist als der radial äußerste Teil der Umfangsfläche (41) des Schaftteils (40), und wobei das hintere Ende (12b) der zweiten Schneidkante (12) näher an der Rotationsachse (3) angeordnet ist als das vordere Ende (12a) der zweiten Schneidkante (12) und der Abstand zwischen der zweiten Schneidkante (12) und der Rotationsachse (3), gesehen in einer Richtung entlang der zweiten Schneidkante (12) von deren hinterem Ende (12b) zu deren vorderem Ende (12a), allmählich zunimmt;
- **dass** der Schneidteil (10) eine Erstreckung in der axialen Richtung des Werkzeugkörpers (2) aufweist, die auf einen Bereich zwischen einer ersten Ebene (P1), die sich senkrecht zu der Rotationsachse (3) erstreckt und das hintere Ende (12b) der zweiten Schneidkante (12) schneidet, und einer zweiten Ebene (P2), die sich senkrecht zu der Rotationsachse (3) erstreckt und das vordere Ende (11a) der ersten Schneidkante (11) schneidet, beschränkt ist.

2. Fräswerkzeug nach Anspruch 1, **dadurch gekennzeichnet:**
- **dass** sich die erste Schneidkante (11) im Wesentlichen geradlinig in einer dritten Ebene (P3) erstreckt, die die Rotationsachse enthält; und
- **dass** sich die zweite Schneidkante (12) im Wesentlichen geradlinig in einer vierten Ebene (P4) erstreckt, die die Rotationsachse (3) enthält, wobei die vierte Ebene (P4) vorzugsweise mit der dritten Ebene (P3) zusammenfällt.

3. Fräswerkzeug nach Anspruch 2, **dadurch gekennzeichnet:**
- **dass** die erste Schneidkante (11) eine solche Neigung in der dritten Ebene (P3) aufweist, dass eine Verlängerung der ersten Schneidkante (11) einen ersten Winkel (α₁) mit der Rotationsachse (3) bildet, wobei der erste Winkel (α₁) größer als oder gleich 20° und kleiner als 90°, vorzugsweise 30-80°, ist; und
- **dass** die zweite Schneidkante (12) eine solche Neigung in der vierten Ebene (P4) aufweist, dass eine Verlängerung der zweiten Schneidkante (12) einen zweiten Winkel (α2) mit der Rotationsachse (3) bildet, wobei der zweite Winkel (α₂) größer als oder gleich 20° und kleiner als 90°, vorzugsweise 30-80°, ist, wobei der erste und der zweite Winkel (α₁, α₂) vorzugsweise im Wesentlichen gleich sind.

4. Fräswerkzeug nach einem der Ansprüche 1-3, **dadurch gekennzeichnet:**
- **dass** die erste Schneidkante (11) an einem Schnitt zwischen einer ersten Fläche (31) an dem Schneidteil (10) und einer zweiten Fläche (32) an dem Schneidteil (10) gebildet ist, wobei die erste Fläche (31) und die zweite Fläche (32) bezüglich der dritten Ebene (P3) spiegelsymmetrisch zueinander sind; und
- **dass** die zweite Schneidkante (12) an einem Schnitt zwischen einer dritten Fläche (33) an dem Schneidteil (10) und einer vierten Fläche (34) an dem Schneidteil (10) gebildet ist, wobei die dritte Fläche (33) und die vierte Fläche (34) bezüglich der vierten Ebene (P4) spiegelsymmetrisch zueinander sind.

5. Fräswerkzeug nach einem der Ansprüche 1-4, **dadurch gekennzeichnet, dass** die erste Schneidkante (11) und die zweite Schneidkante (12) bezüglich einer Symmetrieebene (PS), die sich auf halbem Weg zwischen der ersten und der zweiten Schneidkante (11, 12) senkrecht zu der Rotationsachse (3) erstreckt, spiegelsymmetrisch zueinander sind.

6. Fräswerkzeug nach einem der Ansprüche 1-5, **dadurch gekennzeichnet, dass** der radiale Abstand (r) zwischen dem hinteren Ende (12b) der zweiten Schneidkante (12) und dem radial äußersten Teil der Umfangsfläche (41) des Schaftteils (40) 2-40 mm, vorzugsweise 6-30 mm, beträgt.

7. Fräswerkzeug nach einem der Ansprüche 1-6, **dadurch gekennzeichnet, dass** der Schneidteil (10) einen Haltearm (15) umfasst, der in radialer Richtung in Bezug auf die Rotationsachse (3) über den radial äußersten Teil der Umfangsfläche (41) des Schaftteils (40) hinaus vorspringt, wobei der Haltearm (15) ein inneres Ende (15a) aufweist, das der Rotationsachse (3) zugewandt ist, und ein gegenüberliegendes äußeres Ende (15b) und wobei die erste und die zweite Schneidkante (11, 12) an dem Haltearm (15) an dessen äußerem Ende (15b) angeordnet sind.

8. Fräswerkzeug nach Anspruch 7, **dadurch gekennzeichnet, dass** die erste und die zweite Schneidkante (11, 12) einen Teil eines Schneideinsatzes (16) bilden, der lösbar an einem Einsatzsitz (17) montiert ist, der an dem äußeren Ende (15b) des Haltearms (15) vorgesehen ist.

9. Fräswerkzeug nach Anspruch 7 oder 8, **dadurch gekennzeichnet, dass** der Schneidteil (10) eine Basis (14) umfasst, die den Haltearm (15) trägt und die an dem Schaftteil (40) an dessen vorderem Ende (40a) verschiebbar montiert ist, sodass sie in Bezug auf den Schaftteil (40) senkrecht zu der Rotationsachse (3) und in einer Längsrichtung des Haltearms (15) linear verschiebbar ist, wobei die Basis (14) in unterschiedlichen Verschiebepositionen in Bezug auf den Schaftteil (40) an dem Schaftteil (40) verriegelbar ist, um dadurch eine Einstellung des radialen Abstands zwischen der ersten Schneidkante (11) und der Rotationsachse (3) und des radialen Abstands zwischen der zweiten Schneidkante (12) und der Rotationsachse (3) zu ermöglichen.

10. Fräswerkzeug nach einem der Ansprüche 1-9, **dadurch gekennzeichnet, dass** der Schaftteil (40) stabförmig ist.

11. Fräswerkzeug nach einem der Ansprüche 1-10, **dadurch gekennzeichnet, dass** der Schaftteil (40) eine Länge (L) von 25-500 mm, vorzugsweise 50-200 mm, besonders bevorzugt 100-150 mm, aufweist.

12. Fräswerkzeug nach einem der Ansprüche 1-11, **dadurch gekennzeichnet, dass** der Schneidteil (10) lösbar an dem Schaftteil (40) an dessen vorderem Ende (40a) montiert ist.

13. Verfahren zum Anfasen von Flankenkanten (61-64) von Innen- oder Außenzähnen (60) an einem zylindrischen verzahnten Werkstück (8) an einer ersten Stirnfläche (9a) des Werkstücks (8) und an einer gegenüberliegenden zweiten Stirnfläche (9b) des Werkstücks (8), wobei jeder Zahn (60) an dem Werkstück (8) eine Zahnspitze (65), einen Zahnfuß (66), eine erste Zahnflankenfläche (67a), die sich zwischen der Zahnspitze (65) und dem Zahnfuß (66) auf einer ersten Seite des Zahns erstreckt, und eine zweite Zahnflankenfläche (67b), die sich zwischen der Zahnspitze (65) und dem Zahnfuß (66) auf einer gegenüberliegenden zweiten Seite des Zahns erstreckt, aufweist, wobei eine erste Flankenkante (61) an einem Schnitt zwischen der ersten Zahnflankenfläche (67a) und der ersten Stirnfläche (9a) des Werkstücks (8) gebildet ist, eine zweite Flankenkante (62) an einem Schnitt zwischen der zweiten Zahnflankenfläche (67b) und der ersten Stirnfläche (9a) des Werkstücks (8) gebildet ist, eine dritte Flankenkante (63) an einem Schnitt zwischen der ersten Zahnflankenfläche (67a) und der zweiten Stirnfläche (9b) des Werkstücks (8) gebildet ist und eine vierte Flankenkante (64) an einem Schnitt zwischen der zweiten Zahnflankenfläche (67b) und der zweiten Stirnfläche (9b) des Werkstücks (8) gebildet ist, wobei das Werkstück (8) an einer Maschine befestigt und durch die Maschine um eine Mittelachse (4) des Werkstücks (8) drehbar ist und wobei das Anfasen mittels eines Fräswerkzeugs (1) nach einem der Ansprüche 1-12 durchgeführt wird, das an der Maschine befestigt und durch die Maschine um die Rotationsachse (3) des Werkzeugkörpers (2) drehbar und durch die Maschine in Bezug auf das Werkstück (8) in der axialen Richtung (z) des Werkstücks (8) und in unterschiedlichen Richtungen in einer Ebene (x, y) senkrecht zu der Mittelachse (4) des Werkstücks (8) bewegbar ist, wobei die Rotationsachse (3) des Werkzeugkörpers (2) parallel zu der Mittelachse (4) des Werkstücks (8) verläuft, wobei das Verfahren die folgenden Schritte umfasst:
a) Anordnen des Fräswerkzeugs (1) in einer ersten vorgegebenen Position in Bezug auf das Werkstück (8), wobei die Rotationsachse (3) des Werkzeugkörpers (2) parallel zu der Mittelachse (4) des Werkstücks (8) verläuft und der Schneidteil (10) des Werkzeugkörpers (2) benachbart zu der ersten Stirnfläche (9a) des Werkstücks (8) angeordnet ist und eine der ersten und zweiten Schneidkanten (11, 12) des mindestens einen Paars von Schneidkanten dieser ersten Stirnfläche (9a) zugewandt ist;
b) Drehen des Fräswerkzeugs (1) um die Rotationsachse (3) des Werkzeugkörpers (2) und gleichzeitiges Drehen des Werkstücks (8) um seine Mittelachse (4) mit einem vorgegebenen Verhältnis zwischen der Drehzahl des Fräswerkzeugs (1) und der Drehzahl des Werkstücks (8), während die Rotationsachse (3) des Werkzeugkörpers (2) parallel zu der Mittelachse (4) des Werkstücks (8) gehalten wird und das Fräswerkzeug (1) entlang eines vorgegebenen Pfads in Bezug auf das Werkstück (8) bewegt wird, sodass die Schneidkante oder Schneidkanten, die der ersten Stirnfläche (9a) des Werkstücks (8) zugewandt sind, die erste und die zweite Flankenkante (61, 62) der Zähne (60) an dem Werkstück (8) anfast bzw. anfasen;
c) Bewegen des Fräswerkzeugs (1) in Bezug auf das Werkstück (8), um die Schneidkante oder Schneidkanten, die der ersten Stirnfläche (9a) des Werkstücks (8) zugewandt sind, aus dem Kontakt mit dem Werkstück (8) herauszubewegen;
d) Bewegen des Fräswerkzeugs (1) in Bezug auf das Werkstück (8) in eine zweite vorgegebene Position, wobei die Rotationsachse (3) des Werkzeugkörpers (2) parallel zu der Mittelachse (4) des Werkstücks (8) verläuft und der Schneidteil (10) des Werkzeugkörpers (2) benachbart zu der gegenüberliegenden zweiten Stirnfläche (9b) des Werkstücks (8) angeordnet ist und die andere der ersten und zweiten Schneidkanten (11, 12) des mindestens einen Paars von Schneidkanten dieser zweiten Stirnfläche (9b) zugewandt ist; und
e) Drehen des Fräswerkzeugs (1) um die Rotationsachse (3) des Werkzeugkörpers (2) und gleichzeitiges Drehen des Werkstücks (8) um seine Mittelachse (4) mit einem vorgegebenen Verhältnis zwischen der Drehzahl des Fräswerkzeugs (1) und der Drehzahl des Werkstücks (8), während die Rotationsachse (3) des Werkzeugkörpers (2) parallel zu der Mittelachse (4) des Werkstücks (8) gehalten wird und das Fräswerkzeug (1) entlang eines vorgegebenen Pfads in Bezug auf das Werkstück (8) bewegt wird, sodass die Schneidkante oder Schneidkanten, die der zweiten Stirnfläche (9b) des Werkstücks (8) zugewandt sind, die dritte und die vierte Flankenkante (63, 64) der Zähne (60) an dem Werkstück (8) anfast bzw. anfasen.

14. Verfahren nach Anspruch 13, wobei der genannte vorgegebene Pfad für die Bewegung des Fräswerkzeugs (1) in Bezug auf das Werkstück (8) in Schritt b mindestens einen Teil umfasst, in dem das Fräswerkzeug (1) in seiner axialen Richtung bewegt wird, um dadurch die Schneidkante oder Schneidkanten, die der ersten Stirnfläche (9a) des Werkstücks (8) zugewandt sind, in einer Richtung zu dieser ersten Stirnfläche (9a) hin zu bewegen, und/oder wobei der genannte vorgegebene Pfad für die Bewegung des Fräswerkzeugs (1) in Bezug auf das Werkstück (8) in Schritt e mindestens einen Teil umfasst, in dem das Fräswerkzeug (1) in seiner axialen Richtung bewegt wird, um dadurch die Schneidkante oder Schneidkanten, die der zweiten Stirnfläche (9b) des Werkstücks (8) zugewandt sind, in einer Richtung zu dieser zweiten Stirnfläche (9b) hin zu bewegen.

15. Verfahren nach Anspruch 13 oder 14, wobei der genannte vorgegebene Pfad für die Bewegung des Fräswerkzeugs (1) in Bezug auf das Werkstück (8) in Schritt b mindestens einen Teil umfasst, in dem der Abstand zwischen der Achse oder Drehung (3) des Werkzeugkörpers (2) und der Mittelachse (4) des Werkstücks (8) geändert wird, und/oder wobei der genannte vorgegebene Pfad für die Bewegung des Fräswerkzeugs (1) in Bezug auf das Werkstück (8) in Schritt e mindestens einen Teil umfasst, in dem der Abstand zwischen der Achse oder Drehung (3) des Werkzeugkörpers (2) und der Mittelachse (4) des Werkstücks (8) geändert wird.

16. Verfahren nach einem der Ansprüche 13-15, wobei:
- die ersten Flankenkanten (61) und die zweiten Flankenkanten (62) der Zähne (60) an dem Werkstück (8) in Schritt b jeweils in einer Bearbeitungsrichtung von dem Zahnfuß (66) zu der Zahnspitze (65) des zugehörigen Zahns (60) angefast werden, und
- die dritten Flankenkanten (63) und die vierten Flankenkanten (64) der Zähne (60) an dem Werkstück (8) in Schritt e jeweils in einer Bearbeitungsrichtung von dem Zahnfuß (66) zu der Zahnspitze (65) des zugehörigen Zahns (60) angefast werden.

17. Verfahren nach Anspruch 16, wobei Schritt b die folgenden Teilschritte umfasst:
b1) Anfasen der ersten Flankenkanten (61) der Zähne (60) an dem Werkstück (8), während das Werkstück (8) um seine Mittelachse (4) in einer ersten Drehrichtung (R1) gedreht wird, wobei die zweiten Zahnflankenflächen (67b) vorlaufende Zahnflankenflächen und die ersten Zahnflankenflächen (67a) nachlaufende Zahnflankenflächen sind, und während das Fräswerkzeug (1) um die Rotationsachse (3) des Werkzeugkörpers (2) in derselben Drehrichtung (R1) wie das Werkstück (8) gedreht wird, wenn die ersten Flankenkanten (61), die angefast werden, Flankenkanten von Innenzähnen (60) an dem Werkstück (8) sind, oder in einer entgegengesetzten Drehrichtung (R2), wenn die ersten Flankenkanten (61), die angefast werden, Flankenkanten von Außenzähnen (60) an dem Werkstück (8) sind, und
b2) Anfasen der zweiten Flankenkanten (62) der Zähne (60) an dem Werkstück (8), während das Werkstück (8) um seine Mittelachse (4) in einer zweiten Drehrichtung (R2), die der ersten Drehrichtung (R1) entgegengesetzt ist, gedreht wird, und während das Fräswerkzeug (1) um die Rotationsachse (3) des Werkzeugkörpers (2) in derselben Drehrichtung (R2) wie das Werkstück (8) gedreht wird, wenn die zweiten Flankenkanten (62), die angefast werden, Flankenkanten von Innenzähnen (60) an dem Werkstück (8) sind, oder in einer entgegengesetzten Drehrichtung (R1), wenn die zweiten Flankenkanten (62), die angefast werden, Flankenkanten von Außenzähnen (60) an dem Werkstück (8) sind.

18. Verfahren nach Anspruch 17, wobei Schritt e die folgenden Teilschritte umfasst:
e1) Anfasen der dritten Flankenkanten (63) der Zähne (60) an dem Werkstück (8), während das Werkstück (8) um seine Mittelachse (4) in der ersten Drehrichtung (R1) gedreht wird, und während das Fräswerkzeug (1) um die Rotationsachse (3) des Werkzeugkörpers (2) in derselben Drehrichtung (R1) wie das Werkstück (8) gedreht wird, wenn die dritten Flankenkanten (63), die angefast werden, Flankenkanten von Innenzähnen (60) an dem Werkstück (8) sind, oder in einer entgegengesetzten Drehrichtung (R2), wenn die dritten Flankenkanten (63), die angefast werden, Flankenkanten von Außenzähnen (60) an dem Werkstück (8) sind, und
e2) Anfasen der vierten Flankenkanten (64) der Zähne (60) an dem Werkstück (8), während das Werkstück (8) um seine Mittelachse (4) in der zweiten Drehrichtung (R2) gedreht wird, und während das Fräswerkzeug (1) um die Rotationsachse (3) des Werkzeugkörpers (2) in derselben Drehrichtung (R2) wie das Werkstück (8) gedreht wird, wenn die vierten Flankenkanten (64), die angefast werden, Flankenkanten von Innenzähnen (60) an dem Werkstück (8) sind, oder in einer entgegengesetzten Drehrichtung (R1), wenn die vierten Flankenkanten (64), die angefast werden, Flankenkanten von Außenzähnen (60) an dem Werkstück (8) sind.

19. Computerprogramm mit Anweisungen, die, wenn sie von einer CNC-Maschine ausgeführt werden, bewirken, dass die CNC-Maschine die Schritte nach einem der Ansprüche 13-18 ausführt.

## Revendications

1. Outil de fraisage pour le chanfreinage des arêtes de flanc (61-64) de dents internes ou
de dents externes (60) sur une pièce cylindrique dentée (8) aux faces d'extrémité opposées (9a, 9b) de la pièce (8), l'outil de fraisage (1) comprenant un corps d'outil allongé (2), lequel, à une extrémité arrière (2b), présente une partie arrière (6) configurée pour être fixée à une machine et, à une distance de la partie arrière (6), présente une partie de coupe (10) pourvue d'arêtes de coupe (11, 12),dans lequel :
- le corps d'outil (2) comprend une partie de queue allongée (40) qui porte la partie de coupe (10) et s'étend de la partie de coupe (10) vers la partie arrière (6) et qui présente une extrémité avant (40a) faisant face à la partie de coupe (10), une extrémité arrière opposée (40b) et une surface périphérique (41) s'étendant autour de la partie de queue (40) entre l'extrémité arrière (40b) et l'extrémité avant (40a) de celle-ci, dans lequel la partie de queue (40) présente un axe central longitudinal qui coïncide avec un axe de rotation (3) du corps d'outil (2) ; et
dans lequel
- la partie de coupe (10) constitue une partie axialement la plus avancée du corps d'outil (2) ou le corps d'outil (2) comprend une partie avant (7) qui dépasse la partie de coupe (10) du côté de celle-ci faisant face à l'opposé de la partie arrière (6),dans lequel l'extrémité avant (11a) de la première arête de coupe (11) est située à une distance plus grande de l'axe de rotation (3) qu'une partie la plus extérieure radialement de cette partie avant (7), **caractérisé en**
- **ce que** la partie de coupe (10) est pourvue d'au moins une paire d'arêtes de coupe constituée d'une première arête de coupe (11) faisant face à l'opposé de la partie arrière (6) et d'une seconde arête de coupe (12) faisant face à la partie arrière (6) et située plus près de la partie arrière (6) que la première arête de coupe (11), dans lequel :
• la première arête de coupe (11) présente une extrémité arrière (11b) et une extrémité avant opposée (11a), l'extrémité arrière (11b) de la première arête de coupe (11) étant située plus près de la partie arrière (6) du corps d'outil que l'extrémité avant (11a) de la première arête de coupe (11), dans lequel l'extrémité avant (11a) de la première arête de coupe (11) est située plus près de l'axe de rotation (3) que l'extrémité arrière (11b) de la première arête de coupe (11) et la distance entre la première arête de coupe (11) et l'axe de rotation (3) augmente progressivement dans une direction le long de la première arête de coupe (11) depuis l'extrémité avant (11a) de celle-ci vers l'extrémité arrière (11b) de celle-ci, et
• la seconde arête de coupe (12) présente une extrémité avant (12a) et une extrémité arrière opposée (12b), l'extrémité arrière (12b) de la seconde arête de coupe (12) étant située plus près de la partie arrière (6) du corps d'outil que l'extrémité avant (12a) de la seconde arête de coupe (12), dans lequel l'extrémité arrière (12b) de la seconde arête de coupe (12) est située à une distance plus grande de l'axe de rotation (3) qu'une partie la plus extérieure radialement de la surface périphérique (41) de la partie de queue (40), et dans lequel l'extrémité arrière (12b) de la seconde arête de coupe (12) est située plus près de l'axe de rotation (3) que l'extrémité avant (12a) de la seconde arête de coupe (12) et la distance entre la seconde arête de coupe (12) et l'axe de rotation (3) augmente progressivement dans une direction le long de la seconde arête de coupe (12) depuis l'extrémité arrière (12b) de celle-ci vers l'extrémité avant (12a) de celle-ci ;
- ce que la partie de coupe (10) présente une extension dans la direction axiale du corps d'outil (2) limitée à une zone entre un premier plan (P1) qui s'étend perpendiculairement à l'axe de rotation (3) et intersecte l'extrémité arrière (12b) de la seconde arête de coupe (12) et un second plan (P2) qui s'étend perpendiculairement à l'axe de rotation (3) et intersecte l'extrémité avant (11a) de la première arête de coupe (11).

2. Outil de fraisage selon la revendication 1, **caractérisé en :**
- **ce que** la première arête de coupe (11) s'étend sensiblement de façon rectiligne dans un troisième plan (P3) qui contient l'axe de rotation ; et
- ce que la seconde arête de coupe (12) s'étend sensiblement de façon rectiligne dans un quatrième plan (P4) qui contient l'axe de rotation (3), dans lequel le quatrième plan (P4) coïncide de préférence avec le troisième plan (P3).

3. Outil de fraisage selon la revendication 2, **caractérisé en :**
- **ce que** la première arête de coupe (11) présente une telle inclinaison dans le troisième plan (P3) qu'un prolongement de la première arête de coupe (11) forme un premier angle (α1) avec l'axe de rotation (3), dans lequel le premier angle (α1) est supérieur ou égal à 20° et inférieur à 90°, de préférence 30 à 80° ; et
- ce que la seconde arête de coupe (12) présente une telle inclinaison dans le quatrième plan (P4) qu'un prolongement de la seconde arête de coupe (12) forme un second angle (α2) avec l'axe de rotation (3), lequel second angle (α2) est supérieur ou égal à 20° et inférieur à 90°, de préférence 30 à 80°, dans lequel les premier et second angles (α1, α2) sont de préférence sensiblement égaux.

4. Outil de fraisage selon l'une quelconque des revendications 1 à 3, **caractérisé en :**
- **ce que** la première arête de coupe (11) est formée à une intersection entre une première surface (31) sur la partie de coupe (10) et une seconde surface (32) sur la partie de coupe (10), dans lequel la première surface (31) et la seconde surface (32) sont symétriques par rapport à un miroir l'une par rapport à l'autre par rapport au troisième plan (P3) ; et
- ce que la seconde arête de coupe (12) est formée à une intersection entre une troisième surface (33) sur la partie de coupe (10) et une quatrième surface (34) sur la partie de coupe (10),dans lequel la troisième surface (33) et la quatrième surface (34) sont symétriques par rapport à un miroir l'une par rapport à l'autre par rapport au quatrième plan (P4).

5. Outil de fraisage selon l'une quelconque des revendications 1 à 4, **caractérisé en ce que** la première arête de coupe (11) et la seconde arête de coupe (12) sont symétriques par rapport à un miroir l'une par rapport à l'autre par rapport à un plan de symétrie (PS) qui s'étend à mi-chemin entre les première et seconde arêtes de coupe (11, 12) perpendiculairement à l'axe de rotation (3).

6. Outil de fraisage selon l'une quelconque des revendications 1 à 5, **caractérisé en ce que** la distance radiale (r) entre l'extrémité arrière (12b) de la seconde arête de coupe (12) et la partie la plus extérieure radialement de la surface périphérique (41) de la partie de queue (40) est de 2 à 40 mm, de préférence 6 à 30 mm.

7. Outil de fraisage selon l'une quelconque des revendications 1 à 6, **caractérisé en ce que** la partie de coupe (10) comprend un bras de support (15) qui dépasse en direction radiale par rapport à l'axe de rotation (3) au-delà de la partie la plus extérieure radialement de la surface périphérique (41) de la partie de queue (40),dans lequel le bras de support (15) présente une extrémité intérieure (15a) faisant face à l'axe de rotation (3) et une extrémité extérieure opposée (15b) et dans lequel les première et seconde arêtes de coupe (11, 12) sont disposées sur le bras de support (15) à l'extrémité extérieure (15b) de celui-ci.

8. Outil de fraisage selon la revendication 7, **caractérisé en ce que** les première et seconde arêtes de coupe (11, 12) font partie d'une plaquette de coupe (16) qui est montée de façon amovible à un logement de plaquette (17) prévu à l'extrémité extérieure (15b) du bras de support (15).

9. Outil de fraisage selon la revendication 7 ou 8, **caractérisé en ce que** la partie de coupe (10) comprend une base (14), qui porte le bras de support (15) et qui est montée coulissable linéairement à la partie de queue (40) à l'extrémité avant (40a) de celle-ci de manière à être coulissable linéairement par rapport à la partie de queue (40) perpendiculairement à l'axe de rotation (3) et dans une direction longitudinale du bras de support (15), dans lequel la base (14) est verrouillable à la partie de queue (40) dans différentes positions de coulissement par rapport à la partie de queue (40) afin de permettre ainsi un réglage de la distance radiale entre la première arête de coupe (11) et l'axe de rotation (3) et de la distance radiale entre la seconde arête de coupe (12) et l'axe de rotation (3).

10. Outil de fraisage selon l'une quelconque des revendications 1 à 9, **caractérisé en ce que** la partie de queue (40) est en forme de tige.

11. Outil de fraisage selon l'une quelconque des revendications 1 à 10, **caractérisé en ce que** la partie de queue (40) présente une longueur (L) de 25 à 500 mm, de préférence 50 à 200 mm, plus préférablement 100 à 150 mm.

12. Outil de fraisage selon l'une quelconque des revendications 1 à 11, **caractérisé en ce que** la partie de coupe (10) est montée de façon amovible à la partie de queue (40) à l'extrémité avant (40a) de celle-ci.

13. Procédé de chanfreinage des arêtes de flanc (61-64) de dents internes ou externes (60) sur une pièce cylindrique dentée (8) à une première face d'extrémité (9a) de la pièce (8) et à une face d'extrémité opposée (9b) de la pièce (8), dans lequel chaque dent (60) sur la pièce (8) possède un sommet de dent (65), un pied de dent (66), une première surface de flanc de dent (67a) s'étendant entre le sommet de dent (65) et le pied de dent (66) sur un premier côté de la dent et une seconde surface de flanc de dent (67b) s'étendant entre le sommet de dent (65) et le pied de dent (66) sur un second côté opposé de la dent, une première arête de flanc (61) étant formée à une intersection entre la première surface de flanc de dent (67a) et la première face d'extrémité (9a) de la pièce (8), une seconde arête de flanc (62) étant formée à une intersection entre la seconde surface de flanc de dent (67b) et la première face d'extrémité (9a) de la pièce (8), une troisième arête de flanc (63) étant formée à une intersection entre la première surface de flanc de dent (67a) et la seconde face d'extrémité (9b) de la pièce (8) et une quatrième arête de flanc (64) étant formée à une intersection entre la seconde surface de flanc de dent (67b) et la seconde face d'extrémité (9b) de la pièce (8), dans lequel la pièce (8) est fixée à une machine et pouvant tourner par la machine autour d'un axe central (4) de la pièce (8) et dans lequel le chanfreinage est réalisé au moyen d'un outil de fraisage (1) selon l'une quelconque des revendications 1 à 12, lequel est fixé à la machine et pouvant tourner par la machine autour de l'axe de rotation (3) du corps d'outil (2) et pouvant être déplacé par la machine par rapport à la pièce (8) dans la direction axiale (z) de la pièce (8) et dans différentes directions dans un plan (x, y) perpendiculaire à l'axe central (4) de la pièce (8) avec l'axe de rotation (3) du corps d'outil (2) en parallèle avec l'axe central (4) de la pièce (8), le procédé comprenant les étapes suivantes :
a) positionner l'outil de fraisage (1) dans une première position prédéfinie par rapport à la pièce (8) avec l'axe de rotation (3) du corps d'outil (2) en parallèle avec l'axe central (4) de la pièce (8) et avec la partie de coupe (10) du corps d'outil (2) adjacente à la première face d'extrémité (9a) de la pièce (8) et avec l'une des première et seconde arêtes de coupe (11, 12) de la ou des paires d'arêtes de coupe faisant face à cette première face d'extrémité (9a) ;
b) faire tourner l'outil de fraisage (1) autour de l'axe de rotation (3) du corps d'outil (2) et simultanément faire tourner la pièce (8) autour de son axe central (4) avec une relation prédéfinie entre la vitesse de rotation de l'outil de fraisage (1) et la vitesse de rotation de la pièce (8), tout en maintenant l'axe de rotation (3) du corps d'outil (2) en parallèle avec l'axe central (4) de la pièce (8) et en déplaçant l'outil de fraisage (1) le long d'une trajectoire prédéfinie par rapport à la pièce (8) de sorte que l'arête de coupe ou les arêtes de coupe faisant face à la première face d'extrémité (9a) de la pièce (8) effectuent le chanfreinage des première et seconde arêtes de flanc (61, 62) des dents (60) sur la pièce (8) ;
c) déplacer l'outil de fraisage (1) par rapport à la pièce (8) pour déplacer l'arête de coupe ou les arêtes de coupe faisant face à la première face d'extrémité (9a) de la pièce (8) hors contact avec la pièce (8) ;
d) déplacer l'outil de fraisage (1) par rapport à la pièce (8) vers une seconde position prédéfinie avec l'axe de rotation (3) du corps d'outil (2) en parallèle avec l'axe central (4) de la pièce (8) et avec la partie de coupe (10) du corps d'outil (2) adjacente à la face d'extrémité opposée (9b) de la pièce (8) et avec l'autre des première et seconde arêtes de coupe (11, 12) de la ou des paires d'arêtes de coupe faisant face à cette seconde face d'extrémité (9b) ; et
e) faire tourner l'outil de fraisage (1) autour de l'axe de rotation (3) du corps d'outil (2) et simultanément faire tourner la pièce (8) autour de son axe central (4) avec une relation prédéfinie entre la vitesse de rotation de l'outil de fraisage (1) et la vitesse de rotation de la pièce (8), tout en maintenant l'axe de rotation (3) du corps d'outil (2) en parallèle avec l'axe central (4) de la pièce (8) et en déplaçant l'outil de fraisage (1) le long d'une trajectoire prédéfinie par rapport à la pièce (8) de sorte que l'arête de coupe ou les arêtes de coupe faisant face à la seconde face d'extrémité (9b) de la pièce (8) effectuent le chanfreinage des troisième et quatrième arêtes de flanc (63, 64) des dents (60) sur la pièce (8).

14. Procédé selon la revendication 13, dans lequel ladite trajectoire prédéfinie pour le déplacement de l'outil de fraisage (1) par rapport à la pièce (8) à l'étape b comprend au moins une partie dans laquelle l'outil de fraisage (1) est déplacé dans sa direction axiale afin de déplacer ainsi l'arête de coupe ou les arêtes de coupe faisant face à la première face d'extrémité (9a) de la pièce (8) dans une direction vers cette première face d'extrémité (9a), et/ou dans lequel ladite trajectoire prédéfinie pour le déplacement de l'outil de fraisage (1) par rapport à la pièce (8) à l'étape e comprend au moins une partie dans laquelle l'outil de fraisage (1) est déplacé dans sa direction axiale afin de déplacer ainsi l'arête de coupe ou les arêtes de coupe faisant face à la seconde face d'extrémité (9b) de la pièce (8) dans une direction vers cette seconde face d'extrémité (9b).

15. Procédé selon la revendication 13 ou 14, dans lequel ladite trajectoire prédéfinie pour le déplacement de l'outil de fraisage (1) par rapport à la pièce (8) à l'étape b comprend au moins une partie dans laquelle la distance entre l'axe de rotation (3) du corps d'outil (2) et l'axe central (4) de la pièce (8) est modifiée, et/ou dans lequel ladite trajectoire prédéfinie pour le déplacement de l'outil de fraisage (1) par rapport à la pièce (8) à l'étape e comprend au moins une partie dans laquelle la distance entre l'axe de rotation (3) du corps d'outil (2) et l'axe central (4) de la pièce (8) est modifiée.

16. Procédé selon l'une quelconque des revendications 13 à 15, dans lequel :
- les premières arêtes de flanc (61) et les secondes arêtes de flanc (62) des dents (60) sur la pièce (8) sont chacune chanfreinées dans une direction d'usinage du pied de dent (66) vers le sommet de dent (65) de la dent associée (60) à l'étape b, et
- les troisièmes arêtes de flanc (63) et les quatrièmes arêtes de flanc (64) des dents (60) sur la pièce (8) sont chacune chanfreinées dans une direction d'usinage du pied de dent (66) vers le sommet de dent (65) de la dent associée (60) à l'étape e.

17. Procédé selon la revendication 16, dans lequel l'étape b comprend les sous-étapes suivantes :
b1) chanfreinage des premières arêtes de flanc (61) des dents (60) sur la pièce (8), tout en faisant tourner la pièce (8) autour de son axe central (4) dans un premier sens de rotation (R1) avec les secondes surfaces de flanc de dent (67b) comme surfaces de flanc de dent de tête et avec les premières surfaces de flanc de dent (67a) comme surfaces de flanc de dent de queue, et tout en faisant tourner l'outil de fraisage (1) autour de l'axe de rotation (3) du corps d'outil (2) dans le même sens de rotation (R1) que la pièce (8) lorsque les premières arêtes de flanc (61) qui sont chanfreinées sont des arêtes de flanc de dents internes (60) sur la pièce (8) ou dans un sens de rotation opposé (R2) lorsque les premières arêtes de flanc (61) qui sont chanfreinées sont des arêtes de flanc de dents externes (60) sur la pièce (8), et
b2) chanfreinage des secondes arêtes de flanc (62) des dents (60) sur la pièce (8), tout en faisant tourner la pièce (8) autour de son axe central (4) dans un second sens de rotation (R2) opposé au premier sens de rotation (R1), et tout en faisant tourner l'outil de fraisage (1) autour de l'axe de rotation (3) du corps d'outil (2) dans le même sens de rotation (R2) que la pièce (8) lorsque les secondes arêtes de flanc (62) qui sont chanfreinées sont des arêtes de flanc de dents internes (60) sur la pièce (8) ou dans un sens de rotation opposé (R1) lorsque les secondes arêtes de flanc (62) qui sont chanfreinées sont des arêtes de flanc de dents externes (60) sur la pièce (8).

18. Procédé selon la revendication 17, dans lequel l'étape e comprend les sous-étapes suivantes :
e1) chanfreinage des troisièmes arêtes de flanc (63) des dents (60) sur la pièce (8), tout en faisant tourner la pièce (8) autour de son axe central (4) dans le premier sens de rotation (R1), et tout en faisant tourner l'outil de fraisage (1) autour de l'axe de rotation (3) du corps d'outil (2) dans le même sens de rotation (R1) que la pièce (8) lorsque les troisièmes arêtes de flanc (63) qui sont chanfreinées sont des arêtes de flanc de dents internes (60) sur la pièce (8) ou dans un sens de rotation opposé (R2) lorsque les troisièmes arêtes de flanc (63) qui sont chanfreinées sont des arêtes de flanc de dents externes (60) sur la pièce (8), et
e2) chanfreinage des quatrièmes arêtes de flanc (64) des dents (60) sur la pièce (8), tout en faisant tourner la pièce (8) autour de son axe central (4) dans le second sens de rotation (R2), et tout en faisant tourner l'outil de fraisage (1) autour de l'axe de rotation (3) du corps d'outil (2) dans le même sens de rotation (R2) que la pièce (8) lorsque les quatrièmes arêtes de flanc (64) qui sont chanfreinées sont des arêtes de flanc de dents internes (60) sur la pièce (8) ou dans un sens de rotation opposé (R1) lorsque les quatrièmes arêtes de flanc (64) qui sont chanfreinées sont des arêtes de flanc de dents externes (60) sur la pièce (8).

19. Programme informatique comprenant des instructions qui, lorsqu'elles sont exécutées par une machine CNC, amènent la machine CNC à réaliser les étapes selon l'une quelconque des revendications 13 à 18.
